# EUROPEAN PATENT APPLICATION

(11) **EP 4 550 060 A1**
(43) Date of publication of application: **07.05.2025**
(21) Application number: 24204546.6
(22) Date of filing: 03.10.2024
(51) Int. Cl.: G03H 1/08, G03H 1/22

(54) **HOLOGRAM CALCULATION METHOD**

(30) Priority: 30.10.2023 GB 202316530
(71) Applicant: Envisics Ltd, Milton Keynes MK1 1PT (GB)
(72) Inventor: HAWKER, Sam, Milton Keynes, MK1 1PT (GB); SMEETON, Timothy, Milton Keynes, MK1 1PT (GB); CRESPEL, Thomas, Milton Keynes, MK1 1PT (GB)
(74) Representative: Greenaway, Martin William

(57) **Abstract**

There is provided a hologram engine for calculating a hologram of a target picture comprising a plurality of image points. The hologram engine is arranged to perform a first accumulation comprising, for a first subset of image points: determining, using a point cloud method, a value for every nth pixel of a display device for displaying the hologram; and determining a value for at least some of the other pixels by performing a first interpolation, n is greater than 1. Each image point of the first subset has an associated diffraction angle for use in the point cloud method, each diffraction angle being less than a maximum diffraction angle of the display device.

## Description

### FIELD

The present disclosure relates to a hologram engine for calculating a hologram and a corresponding method. More specifically, the present disclosure relates a hologram engine for calculating a hologram using a point cloud method. Some embodiments relate to a holographic projector, picture generating unit or head-up display.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

In general terms, there is provided a hologram engine for calculating a hologram of a target picture in a computationally efficient manner which allows for the hologram engine to comprise relatively low cost and low power hardware while still being able to achieve substantially real-time hologram calculations. In embodiments, the hologram engine is arranged such that a point-cloud method is used to calculate values for the hologram. However, rather than using the point-cloud method to calculate values for all pixels of the hologram, as is conventional, the hologram engine is arranged to under-sample the hologram during the point-cloud phase of the calculation. This means that the hologram engine is arranged to initially only calculate hologram values for a subset of pixels of the hologram. For example, the hologram engine may be arranged to initially only calculate hologram values for every nth pixel, such as every second, third, fourth or fifth pixel. Thus, each pixel for which a hologram value is initially calculated (using a point-cloud method) may be separated by one or more intermediate pixels for which hologram values are not initially calculated. The hologram engine according to the invention is then arranged to determine values for at least some of the other pixels (i.e. at least some of the intermediate pixels) by performing an interpolation. The inventors have found that interpolation is much less computationally expensive than the initial hologram calculation (using a point-cloud method). Thus, said under-sampling and said interpolating significantly increases the computational speed and efficiency of the hologram calculation (vs calculating the hologram at full resolution using a point-cloud method). Memory requirements for the hologram engine are also significantly reduced. As the skilled reader will appreciate, it is generally desirable to reduce the computational cost of hologram calculations (or to increase the computational efficiency). This is particularly important in order to achieve real-time hologram calculation at a good-quality image resolution. In the context of holographic projectors, such as for head-up displays in vehicles, it is particularly advantageous to be able to achieve this real-time hologram calculation with as little computation power as possible. The hologram calculation method according to the present disclosure contributes to achieving this real-time holography.

The inventors have recognised that the under-sampling and interpolation approach is only possible when the under-sampled hologram has a relatively low spatial frequency. The inventors have recognised that under-sampling and interpolation is not possible when the spatial frequency is high because the phase / complex amplitude values at the display device may be so fast changing that interpolation may be (very) inaccurate and result in (significant) aliasing issues. Thus, the hologram engine according to the present invention is arranged such that the point-cloud method is applied to image points in such a way that the hologram calculated in the point-cloud method has a relatively low spatial frequency. In particular, the hologram engine according to the present invention is arranged such that the resulting hologram (calculated using the point-cloud method) has a spatial frequency that is lower than a maximum spatial frequency that can be displayed by the display device. This will be explained in more detail herein.

Conventionally, a point-cloud hologram calculation may comprise virtually propagating a wave from each image point to the centre of an entrance pupil of a viewer (in a viewing window of an optical system comprising the display device). In other words, conventionally, the wave may be propagated along a light-ray path defined between the image point and the centre of the entrance pupil. The hologram calculation is then based on the properties (contribution) of the wave propagated along this light-ray path at the display device. The propagated wave will intersect the display device at an angle that depends on the position of the centre of entrance pupil and the respective image point. When the calculated hologram is suitably illuminated, a holographic wavefront will be formed that propagates in a way that reconstructs the simulated / propagated wave such that the respective image point is holographically reconstructed to appear at the intended location (defined in the original target picture). In other words, if the propagated wave intersected the display device at a particular angle, the holographically reconstructed point will appear at a position in a field of view of a system comprising the display device that depends on that angle, provided that angle falls within the field of view of the display device. The field of view is typically determined by (at least): a) a wavelength of light used to illuminate the display device; and b) a pitch of the pixels of the display device (i.e. a distance between the centres of adjacent pixels). The smaller the pitch, the larger the field of view. The display device may only be able to holographically reconstruct image points within the angular range of said field of view.

After thorough simulation and experimentation, the inventors have found that the spatial frequency of a hologram of an image point calculated using a conventional point-cloud method will generally depend on the angle made by the light-ray path along which the wave is propagated and the display device. Spatial frequency may be greatest when the light-ray / propagation path makes an angle with the display device that is equal to a maximum diffraction angle of the display device. Spatial frequency may be lowest when the light-ray / propagation path makes an angle with the display device which is equal to zero (i.e. the propagation path is substantially normal to the display device). The spatial frequency may refer to the frequency of the values (e.g. complex amplitudes) at the display device. In a phase-only hologram, a hologram of a point having a relatively high spatial frequency may have a rapidly changing phase. For example, the phase of adjacent pixels of a display device displaying the hologram may change by close to pi. A hologram of an image point having a relatively low spatial frequency may have a relatively slowly changing phase. For example, the phase of adjacent pixels of the display device displaying the hologram may change by a relatively small fraction of pi. Importantly, the inventors have recognised that, when a hologram has a low spatial frequency, the initial hologram calculation can be performed at a lower resolution. For example, the complex amplitude / phase at the display device may be sampled for a fraction of the pixels of the display device. The inventors have recognised that, when the spatial frequency is relatively low, values for the (intermediate) pixels between sampled pixels may be filled in using interpolation. The inventors have recognised that under-sampling and interpolation is not possible when the spatial frequency is relatively high because the phase / complex amplitude values at the display device may be so fast changing that interpolation may be (very) inaccurate and result in (significant) aliasing issues. Thus, the hologram engine according to the present invention is arranged such that the point-cloud method is applied to image points in such a way that the hologram calculated in the point-cloud method has a relatively low spatial frequency.

The inventors have recognised that the under-sampling and interpolation hologram calculation described above can be used if image points having an appropriate associated diffraction angle are chosen. In particular, the inventors have found that said under-sampling and interpolation can be applied to image points having an associated diffraction angle that is less than the maximum diffraction angle of the display device. The associated diffraction may herein mean the angle which is used in the point cloud method. In other words, the associated diffraction angle may refer to the angle made by the propagation path used in the point-cloud method along which the wave is propagated.

In some embodiments, the hologram engine is arranged to selectively apply the under-sampling and interpolation approach to image points having an (initial) position in the target picture that is such that the diffraction angle of the image point is less than maximum diffraction angle of the display device. In some embodiments, the hologram engine may be arranged to process image points to decrease the diffraction angle. This may mean translating or otherwise moving image points such that a propagation path / light-ray path from the translated image point makes an angle with the display device that is less than the maximum diffraction angle of the display device. Once the hologram / complex values of a translated image point have been determined (by under-sampling and then interpolating, as described), the image point can be pushed back to its original intended position using one or more grating functions. The one or more grating functions may effectively be high spatial frequency functions which are added to the low spatial frequency hologram.

In some embodiments, the hologram engine may be arranged such that the amount or degree of under-sampling is dependent on the diffraction angle associated with the image point for which with the hologram is being calculated. For example, in general terms, under-sampling may be defined as determining a value for every nth pixel of a display device for displaying the hologram, wherein n is an integer greater than 1. In some embodiments, n may increase as the diffraction angle of the image point for which hologram values are being calculated decreases. For example, as the diffraction angle approaches zero (or is equal to zero), n may be highest.

The hologram engine according to the present invention comprises further features which may be optional and which contribute to increasing computational efficiency and reducing memory usage when implementing the hologram calculation method.

For example, during a first data processing stage, which may be referred to as a first accumulation, the hologram engine may be arranged to determine individual values for the nth pixels for each image point in a first subset of image points of the target picture. Thus, there may be as many values for each of the nth pixels as there are image points in the first subset. The hologram engine many be further arranged to combine (e.g. sum) these values at each of the nth pixels. This may be performed before the first interpolation. The hologram engine may be arranged to perform the first interpolation after the step of determining the combined values. In other words, the interpolation may be performed on combined values at each pixel. The inventors have recognised that, by performing the first interpolation after the combination step, the first interpolation may only need to be performed once during a single iteration of the first accumulation even though a point cloud method has been applied to a plurality of image points. This advantageously reduces the compute time of the first accumulation compared to, for example, performing the interpolation for each image point in the subset. The inventors recognised that this effect can be achieved because the sum of a finite number of slowly changing functions is generally another slowly changing function. Thus, the combination of values of a finite number of holograms having a low spatial frequency (i.e. having slowly changing values) is another hologram having a low spatial frequency. So, the inventors recognised that it is still possible to perform the interpolation without aliasing issues after the combination step. The inventors have developed further specific implementations of the hologram engine comprising second and, optionally, third accumulations.

In another example, the inventors have recognised that it may be important for the diffraction grating to be applied after a respective interpolation. In more detail, a first interpolation may be performed in a first dimension / direction (filling in intermediate pixels separating the nth pixels in the first dimension). The inventors have recognised that, if a first grating function for translating light in the first dimension is to be applied, this should be done after the first interpolation. This is because the first grating function may be a relatively high frequency function and so should be applied after the first interpolation. Similarly, if a second grating function for translating light in a second dimension, perpendicular to the first dimension, is to be applied, this should be done after a second interpolation in the second dimension.

In some examples, it would be desirable to applying different grating functions to different subsets of image points. The specific implementation of the first to third accumulators / accumulations described herein enables this in a computationally efficient manner.

In a first aspect of the present disclosure there is provided a hologram engine for calculating a hologram of a target picture comprising a plurality of image points. The hologram may be for displaying on a display device comprising a plurality of pixels, such as an array of pixels. In other words, the hologram that is calculated by the hologram may comprise a plurality of pixel values, each hologram pixel value being for display on a pixel of the display device. In some embodiments, the array of pixels of the display device extends in at least a first dimension. In some embodiments, the array of pixels of the display device extends in a second dimension also. The array of pixels may be a regular array.

The hologram engine is arranged to perform a first processing stage which herein may be referred to as a first accumulation. This may mean that the calculation of the hologram of the target picture comprises the hologram engine performing the first accumulation. The first accumulation comprises determining, using a point cloud method, a value only for every nth pixel of a display device (e.g. the display device described above), wherein n is an integer greater than 1. Thus, the hologram may be described as being under-sampled during the point cloud method calculation. This is because, if n is greater than 1, then values may be determined for no more than every other pixel of the display device. Values for the other / remaining pixels may not be determined using the point cloud method.

The hologram engine is further arranged to determine a value for at least some of the other pixels by performing a first interpolation. The "other" pixels herein refers to the pixels for which values are not determined by the point cloud method. These pixels may also be referred to as "intermediate" pixels throughout this disclosure. The first interpolation may be based on the values determined using the point cloud method. In other words, the interpolation may comprise receiving values for the nth pixels (determined using the point cloud method) and interpolating those values to determine values for at least some of the intermediate or "other" pixels. As described above, this under-sampling and interpolation may allow for the calculation of the hologram to be made more efficient, for example at least twice as efficient (or even as high as five times as efficient) compared to determining values for each of the pixels using a point cloud method.

The hologram engine is further arranged such that each image point of the first subset has an associated diffraction angle for use in the point cloud method that is less than a maximum diffraction angle of the display device. As described above, this is such that the hologram of the image point has a spatial frequency that is lower than a maximum spatial frequency that can be displayed on the display device. This means that the under-sampling and interpolation can be performed without causing (significant) aliasing issues.

The inventors have found that the closer the diffraction angle may be to zero, the greater the extent the hologram can be under-sampled when the point-cloud method is applied and then interpolated without significant aliasing issues. So, the efficiency gains of calculating the hologram according to the present disclosure may increase as the diffraction angle decreases. For example, n may increase as the diffraction angle decreases. For example, as the diffraction angle associated with the image point approaches zero (e.g. the image point is substantially normal to the display device), n may be highest such as 3 or higher, optionally 5 or higher. This may mean that the hologram engine is arranged to determine values for only every third or every fifth pixel, respectively, using the point cloud method. n may be lower for larger diffraction angles. For example, for an image point having a diffraction angle equal to half the maximum diffraction angle of the display, n may be equal to 2.

The hologram engine according to the first aspect has been described above in relation to a single image point. However, the first accumulation will generally be applied to a plurality of image points (e.g. first subset of the image points). For example, the first accumulation may comprise, for a first subset of image points: determining, using a point cloud method, a value for every nth pixel of a display device for displaying the hologram, wherein n is greater than 1; and determining a value for at least some of the other pixels by performing a first interpolation. Each image point of the first subset has an associated diffraction angle for use in the point cloud method, each diffraction angle being less than a maximum diffraction angle of the display device.

As used herein, the values that are determined by the hologram engine may be referred to as "complex values" or "hologram values". The values may contain amplitude and / or phase information / values. The values may alternatively be referred to grey levels assigned to each pixel. As above, some of these values (every nth value) are determined using a point-cloud method. The skilled person will be familiar with point-cloud methods. In general terms, the hologram engine being arranged to perform a point-cloud method may comprise virtually / computationally propagating waves (also referred to herein as "wavelets") associated with each image point along a propagation path and then determining the contribution of the propagated wave(s) at a display device. Based on the determined / simulated contribution at the display device for each image point, a hologram can be calculated. For example, an array of (complex) values of the wave at the intersection of the wave and the display device may be determined. From this, a hologram may be calculated which, when suitably illuminated, spatially modulates light incident thereon to form a holographic wavefront that may reconstruct the or each image point. In the calculation of a phase-only hologram, an array of phase values for pixels of the display device may be determined. Conventionally, in a point-cloud method, the values would be calculated for all pixels of the hologram / display device. The hologram engine according to the present disclosure differs by only calculating the values for every nth pixel of the display device (i.e. by under-sampling the hologram).

As used herein, an accumulation refers to an iterative process as part of the hologram calculation in which a plurality of values are calculated and combined. For example, the first accumulation may iterate over the first subset of image points. In particular, for each image point of the first subset of image points, the first accumulation may comprise calculating a value for each of the nth pixels of the display device. The values calculated in a particular iteration may be combined with (e.g. added to) the values calculated in the previous iteration. Thus, at the end of the last iteration, a combined value for each of the nth pixels of the display device may be output. Each combined value (for each pixel) may represent a combination / sum of all the values determined at that respective pixel of the display device for each image point of the first subset. The hologram may be arranged to perform further accumulations (e.g. second and third accumulations), as will be described in more detail below. The terms accumulation and data processing stage may be used interchangeably. In particular, the first accumulation may be referred to as a first data processing stage. The second accumulation may be referred to as a second data processing stage. The third accumulation may be referred to as a third data processing stage.

As used herein, the diffraction angle associated with an / each image point refers to an angle made by a propagation path used in the point cloud method for that image point with the display device. In particular, the angle may be the angle between the propagation path and a normal of the display device. As described above, a point cloud method comprises determining a contribution of a wave propagated along a propagation path. The values that are determined (for each of the nth pixels) each represent a contribution of the propagated wave at that pixel. The diffraction angle is less than the maximum diffraction angle of the display device. In some embodiments, the propagation path used in the point cloud method follows a light ray path from the image point. In such embodiments, a diffraction angle that is less than the maximum diffraction angle may be achieved by selectively applying the method only to a first subset of pixels that are positioned so as to make such an angle with the display device. In some embodiments, the hologram engine is arranged to translate or otherwise move the starting point of the propagation path to reduce the angle (such that it is less, or much less, than the maximum angle). This may have the effect of moving the image point. As described, the spatial frequency of the hologram / determined values will be relatively low when the angle is less than the maximum diffraction angle, advantageously allowing for under-sampling and interpolation with significant aliasing issues. In some embodiments, the diffraction angle may be less than half the maximum diffraction angle of the display device, optionally less than a quarter the maximum diffraction angle of the display device, optionally substantially equal to zero.

The maximum diffraction angle of the display device may depend on a pitch of pixels of the display device. In some embodiments, the maximum diffraction angle may be 2 degrees or greater, optionally 3 degrees or greater. As above, the maximum diffraction angle may be defined with respect to a normal of the display device. This may mean that a display device with a maximum diffraction angle of 2 degrees may have a field of view of 4 degrees. In some embodiments, the diffraction angles associated with the image points of the first subset may be 50% or less of the maximum diffraction angle. For example, the diffraction angles associated with the image points of the first subset may be no greater 0.5 degrees.

As used herein, the maximum diffraction angle of the display device refers to the maximum angle at which light can be diffracted or deviated from its original path after interacting with the display device. Thus, the maximum diffraction angle of the display device may define a field of view of the system and the size of a replay field. The display device may only be able to reconstruct image points within the range of the maximum diffraction angle. The maximum diffraction angle is dependent on the wavelength of incident light (incident on the display device) and a pixel pitch of the display device. As the pixel pitch decreases, the maximum diffraction angle increases. In embodiments, the pixel pitch of the display device is equal in both a first and second dimension, thus the maximum diffraction angle in the first and second dimension may be substantially equal. Throughout this disclosure, the maximum diffraction angle is defined with respect to a normal of the display device. As such, light may be emitted from the display device over a range of angles equal to +/- the maximum diffraction angle.

In some embodiments, the display device is a spatial light modulator. In some embodiments, the display device is a liquid crystal on silicon spatial light modulator.

In some embodiments, the hologram engine is arranged such that determining the values for each nth pixels comprises: for each image point of the first subset, using a point cloud method to determine values for the nth pixels of the display device; and combining the determined values at each of the nth pixels. In such embodiments, the first interpolation is based on the combined values determined for each nth pixel. Thus, the first interpolation may be performed after the step of combining the determined values at each of the nth pixels. As described above, it may be advantageous for the first interpolation to be performed after the (multiple) values determined for each (hologram) pixel (one value per image pixel of the first subset) have been combined. This may be because the interpolation need only be performed once for the plurality of image points. The inventors have recognised that this is possible because the hologram values of each of the image points has a low spatial frequency and so is a slowly changing function. A combination of a finite plurality of slowly changing functions may be another slowly changing function. So, the combined values also represent a slowly changing function having a low spatial frequency and so may be suitable for performing an interpolation without the risk of aliasing issues.

In some embodiments, the values determined using the point cloud method for each image point are values representing the contribution of a wave propagated along a path that makes an angle with the display device that is equal to the associated diffraction angle for the respective image point. In other words, the propagation path makes an angle with the display device that is less than the maximum diffraction angle of the display device.

In some embodiments, the diffraction angle associated with each image point of the first subset is defined by a first path from the image point to an entrance pupil of a viewer. This may be the case when a conventional point cloud method is used without pre-processing of the image points. In such embodiments, the image points of the first subset may be selected so as to positioned in the target image such that the first path makes an angle that is less than the maximum diffraction angle of the display device. In other words, the image points of the first subset may not be substantially at an edge of a replay field / field of view. The image points of the first subset may be closer to a centre of the target picture than an edge of the target picture, for example.

In some embodiments, the diffraction angle associated with each image point of the first subset is defined by a second path arranged as if the respective image point has been moved within the target picture to be closer to a centre of the target picture. In such embodiments, there may be some pre-processing of the target image to move the image points closer to the centre of the target picture. This may be such that the second path makes an angle with the display device that is reduced relative to an angle made by the respective first path for that image point (and that is less than the maximum diffraction angle of the display device).

In some embodiments, the maximum diffraction angle of the display device defines a replay field comprising a central portion surrounded by an outer portion. The central portion may comprise a centre of the replay field. The centre of the replay field may be concentric with a centre of the central portion. In some embodiments, the central portion occupies less than 75% of the replay field, optionally less than 50% of the replay field, optionally less than 25% of the replay field. The central portion may represent a portion of the replay field in which a hologram for a point anywhere in the central portion has a sufficiently low spatial frequency that the hologram values may be initially under-sampled and interpolation then applied without causing significant aliasing issues.

In some embodiments, the first subset of image points are contained only in the central portion of the replay field. In such embodiments, the diffraction angle associated with each image point of the first subset may be defined by the first path from the image point to an entrance pupil of a viewer. In other words, image points in the central portion of the replay field may not require pre-processing in order for the under-sampling and interpolation approach to be achieved without significant aliasing issues.

In some embodiments, the point cloud method is arranged such that it is as if the first subset of image points have been moved from the outer potion to the central portion of the replay plane. In such embodiments, the diffraction angle associated with each image point of the first subset may be defined by a path according to the second path described above. In other words, the hologram engine may be arranged to pre-process the first subset of image points such that they are translated or otherwise moved from the outer portion to the central portion (i.e. to be closer to the centre of the replay field). This reduces the angle made by the second path and the display device, relative to an angle made when the image point(s) is/are in their original position(s). This may cause a corresponding reduction in the spatial frequency of the hologram calculated using a point cloud method.

In some embodiments, the hologram engine is arranged such that at least some of the pixels for which values are determined using a point cloud method are separated in a first dimension by one or more first intermediate pixels. In such embodiments, the display device may comprise an array of pixels extending at least in the first dimension. In some embodiments, the first interpolation is performed in the first dimension to determine values for the first intermediate pixels.

In some embodiments, the first accumulation further comprises applying a first grating function arranged to translate light incident thereon in a first direction that is parallel to the first dimension. The hologram engine may be arranged such that the first accumulation comprises applying the grating function after performing the first interpolation. In some embodiments, the hologram engine is arranged such that the first grating function is applied to the nth pixels and the first intermediate pixels (of the hologram).

In some embodiments, the hologram is for a display device comprising an array of pixels extending in the first dimension and a second dimension different to the first dimension. In some embodiments, the first dimension is perpendicular to the second dimension. In some embodiments, the hologram engine is arranged such that at least some of the pixels for which values are determined using a point cloud method are separated in the second dimension by one or more second intermediate pixels. In some embodiments, the hologram engine is arranged determine values for the second intermediate pixels by performing a second interpolation in the second dimension, the hologram engine being arranged to perform the second interpolation after the first interpolation.

In some embodiments, the hologram engine is arranged to perform a second accumulation. The second accumulation may comprise receiving the values determined in the first accumulation. When the first accumulation comprises combining values at each pixel, it may be the combined values that are received.

In some embodiments, the hologram engine being arranged to perform a second accumulation comprises repeating the first accumulation for k subsets of image points of the target picture. The second accumulation may further comprise receiving the respective values from the first accumulation for each of the k subsets of image points. In some embodiments, each of the k subsets of image points fall within a discrete angular range defined by a first angle in the first dimension and a second angle in the second dimension. The second angle may be the same for each of the k subsets. In other words, each of the k subsets of the image points may, together, form a row or column. In the same way as for the first subset of image points, each image point of the k subsets has an associated diffraction angle for use in the point cloud method, each diffraction angle being less than a maximum diffraction angle of the display device.

In some embodiments, the hologram engine is further arranged to combine the values determined for each of the nth pixels and the first intermediate pixels during the second accumulation (if any).

In some embodiments, the second accumulation comprises the second interpolation. The hologram engine may be arranged such that the second interpolation is performed after the step of combining the values determined during the second accumulation. The advantage of this is similar to what was described in relation to the first accumulation. In particular, this arrangement may advantageously mean that the second interpolation need only be performed once, despite there being k subsets of image points.

The second accumulation may further comprise applying a second grating function arranged to translate light incident thereon in a second direction that is parallel to the second dimension. The hologram engine may arranged such that the second accumulation comprises applying the second grating function after performing the second interpolation. The hologram engine may be arranged such that the second grating function is applied to the nth pixels and the first and second intermediate pixels (of the hologram).

In some embodiments, the hologram engine is arranged to perform a third accumulation. The third accumulation may comprise receiving the values determined in the second accumulation. This may be after the combining and interpolation steps.

In some embodiments, the third accumulation comprises repeating the second accumulation for I subsets of image points of the target picture and receiving the respective values. The third accumulation further comprises, for each of the I subsets of image points corresponding to a discrete angular range defined by a first angle in the first dimension and a second angle in the second dimension wherein the second angle is different each time the second accumulation is repeated. In the same way as for the first subset of image points, each image point of the I subsets has an associated diffraction angle for use in the point cloud method, each diffraction angle being less than a maximum diffraction angle of the display device.

In some embodiments, the hologram engine is arranged to divide the target picture into a plurality of subsets of image points by dividing the target picture into a plurality of discrete angular ranges in the first dimension and the second dimension.

In some embodiments, the hologram engine is arranged to divide the target picture into an array of cells. Each cell may contain a subset of image points. For example, each cell may be defined by angular ranges in the first and second dimensions. The array of cells may extend in the first dimension and the second dimension. In some embodiments, the first accumulation is performed initially for the image points of a first cell of the array of cells. The second accumulation may comprise repeating the first accumulation for each cell in a column or row of cells of the array of cells which comprises the first cells. The third accumulation may comprise repeating the first and second accumulation for the other of each row or column of cells of the array of cells.

The first accumulation may require data to be stored in a relatively smaller memory than the memory that is required for the third accumulation (and also the second accumulation). However, the memory used in the first accumulation may need to be accessed relatively frequently (more frequently than the memory used in the third accumulation, for example). Thus, the inventors have found that it may be beneficial for the hologram engine to use different memories in the different accumulations. For example, the first and / or second accumulation may be implemented using registers whereas the third accumulation may be implemented using VRAM.

In a second aspect, there is provided a hologram engine for calculating a hologram of a target picture comprising a plurality of image points. The hologram is for displaying on a display device comprising an array of pixels extending in at least a first dimension. The display device has a maximum diffraction angle defined with respect to a normal of the display device. This may refer to the maximum diffraction angle in the first dimension. The hologram engine is arranged to perform a first accumulation. For each image point of a first subset of image points of the target picture, values are determined (only) at a first subset of pixels of the display device. In other words, the hologram is under-sampled. The values represent the contribution of a wave propagated along a path that makes an angle with the display device that is less than the maximum diffraction angle, optionally less than half the maximum diffraction angle.

At least some of the pixels of the first subset are separated in a first dimension by one or more first intermediate pixels. The first intermediate pixels are complex values of the propagated wave which are not, initially, determined. The first accumulation further comprises: for each pixel of the first subset, combining the values determined at that pixel for each image point (if any). Combining may mean superimposing, summing of the values. If the values are complex values, comprising imaginary and real parts, these parts may be combined separately. The first accumulation further comprises determining values for the first intermediate pixels by performing a first interpolation in the first dimension based on the combined values of the first accumulation (for the first subset of pixels).

In a third aspect, there is provided a method of calculating a hologram of a target picture comprising a plurality of image points. The method comprises performing a first accumulation. The first accumulation comprises, for a first subset of image points: determining, using a point cloud method, a value for every nth pixel of a display device for displaying the hologram, wherein n is greater than 1. The first accumulation further comprises determining a value for at least some of the other pixels (for which values are not determined by the point cloud method) by performing a first interpolation (based on the hologram values determined using the point cloud method). Each image point of the first subset has an associated diffraction angle for use in the point cloud method, each diffraction angle being less than a maximum diffraction angle of the display device (defined with respect to a normal of the display device) (optionally, less than half the maximum diffraction angle of the display device).

The method is such that determining the values for each nth pixels comprises: for each image point of the first subset, using a point cloud method to determine values for the nth pixels of the display device; and combining the determined values at each of the nth pixels.

In some embodiments, the first interpolation is based on the combined values determined for each nth pixel.

In some embodiments, the values determined using the point cloud method for each image point are values representing the contribution of a wave propagated along a path that makes an angle with the display device that is equal to the associated diffraction angle for the respective image point (i.e. an angle that is less than the maximum diffraction angle of the display device).

In some embodiments, the diffraction angle associated with each image point of the first subset is defined either: by a first path from the image point to an entrance pupil of a viewer; or by a second path arranged as if the respective image point has been moved within the target picture to be closer to a centre of the target picture such that the second path makes an angle with the display device that is reduced relative to an angle made by the respective first path for that image point (and that is less than the maximum diffraction angle of the display device).

In some embodiments, the maximum diffraction angle of the display device defines a replay field comprising a central portion surrounded by an outer portion. The central portion may comprise a centre of the replay field. The centre of the replay field may be concentric with the centre of the central portion. The central portion may occupy less than 75% of the replay field, optionally less than 50% of the replay field, optionally less than 25% of the replay field.

In some embodiments, the first subset of image points may be contained in the central portion of the replay field. In some embodiments, the point cloud method is arranged such that it is as if the first subset of image points have been moved from the outer potion to the central portion of the replay plane.

In some embodiments, the first accumulation is such that at least some of the pixels for which values are determined using a point cloud method are separated in a first dimension by one or more first intermediate pixels (wherein the display device comprises an array of pixels extending at least in the first dimension). The step of performing the first interpolation may be performed in the first dimension to determine values for the first intermediate pixels.

In some embodiments, the first accumulation further comprises the step of applying a first grating function arranged to translate light incident thereon in a first direction that is parallel to the first dimension. In some embodiments, the method comprises applying the grating function after performing the first interpolation.

In some embodiments, the hologram engine is arranged such that the first grating function is applied to the nth pixels and the first intermediate pixels (of the hologram).

In some embodiments, the hologram is for a display device comprising an array of pixels extending in the first dimension and a second dimension different to the first dimension (optionally, perpendicular). In some embodiments, the method is such that at least some of the pixels for which values are determined using a point cloud method are separated in the second dimension by one or more second intermediate pixels. In some embodiments, the method further comprises determining values for the second intermediate pixels by performing a second interpolation in the second dimension, the hologram engine being arranged to perform the second interpolation after the first interpolation.

In some embodiments, the method further comprises performing a second accumulation. This may be after performing the first accumulation (for a first time). The second accumulation may comprise receiving the values determined in the first accumulation. This may be after the combining and / or the interpolation step. The second accumulation may further comprise repeating the first accumulation for m subsets of image points of the target picture and receiving the respective (complex) values. Each of the m subsets of image points may correspond to a discrete angular range defined by a first angle in the first dimension and a second angle in the second dimension. The second angle may be the same for each of the m subsets such that the m subsets together forms a column or row extending in the first dimension. The method may further comprise combining the values determined for each of the nth pixels and the first intermediate pixels during the second accumulation. The second accumulation may comprise the second interpolation.

The method may be such that the second interpolation is performed after the step of combining the values determined during the second accumulation. The second accumulation may further comprise applying a second grating function arranged to translate light incident thereon in a second direction that is parallel to the second dimension.

In some embodiments, the method further comprises performing a third accumulation. The third accumulation may comprise receiving the values determined in the second accumulation. This may be after the combining step of the second accumulation and / or after the second interpolation.

The third accumulation may comprise repeating the second accumulation for I subsets of image points of the target picture. The third accumulation may comprise receiving the respective values for each of the I subsets. Each of the I subsets of image points may corresponding to image points contained in a discrete angular range defined by a first angle in the first dimension and a second angle in the second dimension. The second angle is different each time the second accumulation is repeated.

The method may comprise dividing the target picture into a plurality of subsets of image points by dividing the target picture into a plurality of discrete angular ranges in the first dimension and the second dimension.

In some embodiments, the method may comprise dividing the target picture into in an array of cells. Each cell may contain a subset of image points. The array of cells may comprise cells extending in the first dimension and the second dimension. The method may comprise the first accumulation being performed initially for the image points of a first cell of the array of cells. The second accumulation may comprise repeating the first accumulation for each cell in a column or row of cells of the array of cells which comprises the first cells. The third accumulation may comprise repeating the first and second accumulation for each of the other of the row or column of cells of the array of cells.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of rr/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figure 6 shows a schematic representing a conventional point cloud hologram method;
Figure 7A shows a hologram of a first image point of the point cloud of Figure 6 in isolation;
Figure 7B shows a hologram of another image point, different to the first image point, of the point cloud of Figure 6 in isolation;
Figure 8 shows an under-sampled sub-hologram in which every fifth pixel has been sampled;
Figure 9 shows a target picture;
Figure 10 shows the target picture of Figure 9 divided into a plurality of cells;
Figure 11 shows a central portion and an outer portion of the target picture, in which cells in the central portion are shaded in grey;
Figure 12 shows another example showing the target picture having an outer portion and first to third central portions, in which cells in the central portions are shaded in progressively darker grey the closer the portion is to a centre of the target picture;
Figure 13A shows a portion of an under-sampled sub-hologram in which every other pixel has been sampled;
Figure 13B shows a portion of an under-sampled sub-hologram in which every third pixel has been sampled;
Figure 13C shows a portion of an under-sampled sub-hologram in which every fourth pixel has been sampled;
Figure 14A shows a first image point of a point cloud in a point cloud hologram including a light-ray path extending from the first image point;
Figure 14B shows the propagation path along which a wave is propagated for calculating a contribution of the first image point to the hologram which is different to the light-ray path of Figure 14A;
Figure 15 show a flow diagram representing a first accumulation as applied to an individual cell of the target picture;
Figure 16A shows a target picture divided into cells in which the cell of the first accumulation is highlighted in grey;
Figure 16B shows a portion of an under-sampled hologram in which every fifth pixel has been sampled;
Figure 16C shows a portion of the under-sampled hologram of Figure 16B after a first interpolation in the x direction has been applied;
Figure 16D shows a holographic reconstruction formed by the hologram of Figure 16B (or 16C);
Figure 17 show a flow diagram representing a second accumulation as applied to a row of cells of the target picture;
Figure 18 shows a flow diagram representing a third accumulation as applied to an array of rows of cells of the target picture (i.e. to a plurality of rows of cells);
Figure 19A shows a target picture divided into cells in which the row of cells of the second accumulation of Figure 17 is highlighted in grey;
Figure 19B shows a portion of an under-sampled hologram in which values for rows of pixels have been determined;
Figure 19C shows a portion of a full-resolution hologram formed by interpolating the hologram of Figure 19B in the y direction;
Figure 19D shows a holographic reconstruction formed by the hologram of Figure 19B (or 19C);
Figure 20A shows a target picture divided into cells in which a 2D array of cells of the third accumulation is highlighted in grey;
Figure 20B shows a portion of a full-resolution hologram in which values for a contiguous block of pixels have been determined; and
Figure 20C shows a reconstruction of the hologram of Figure 20B.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

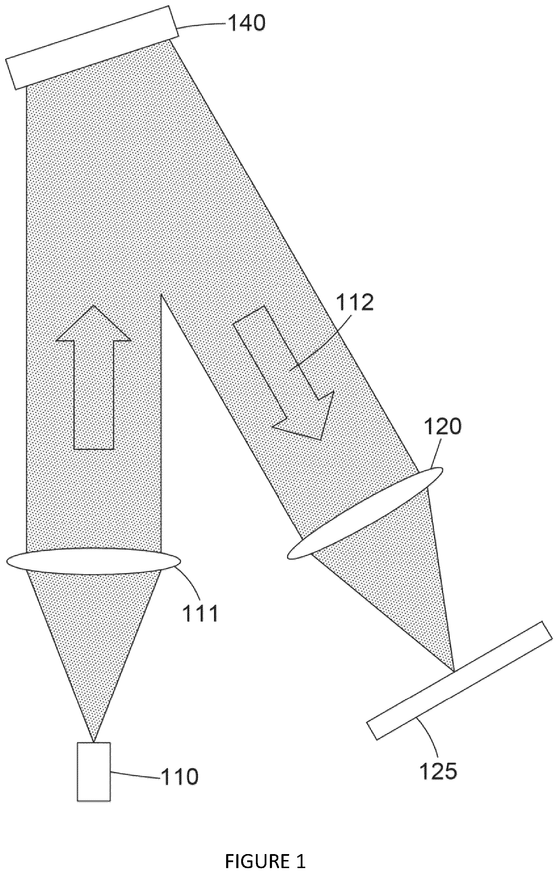

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application 2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application 2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application 2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a `light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

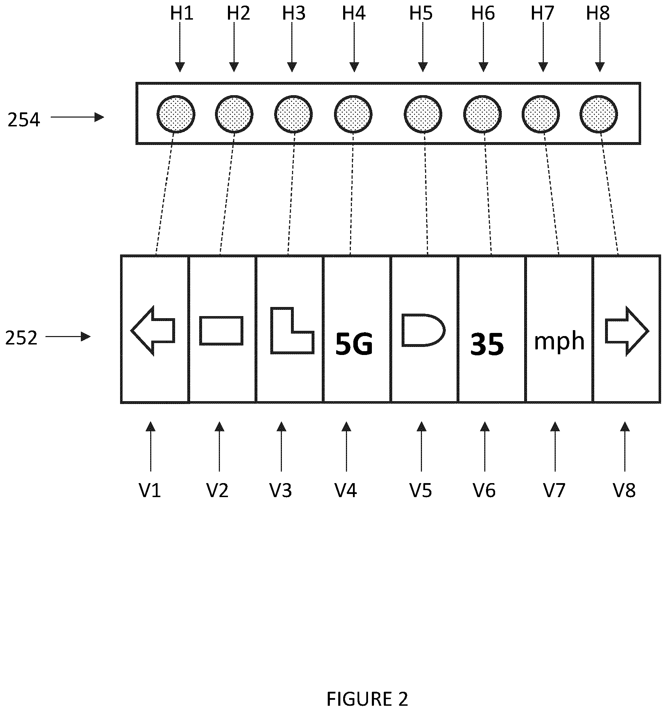

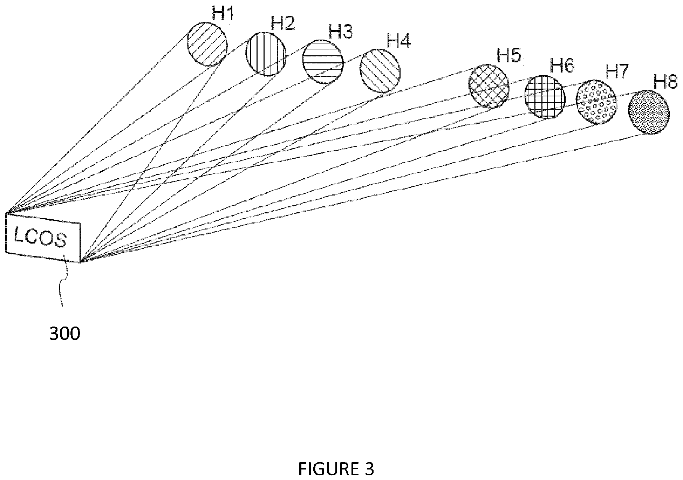

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

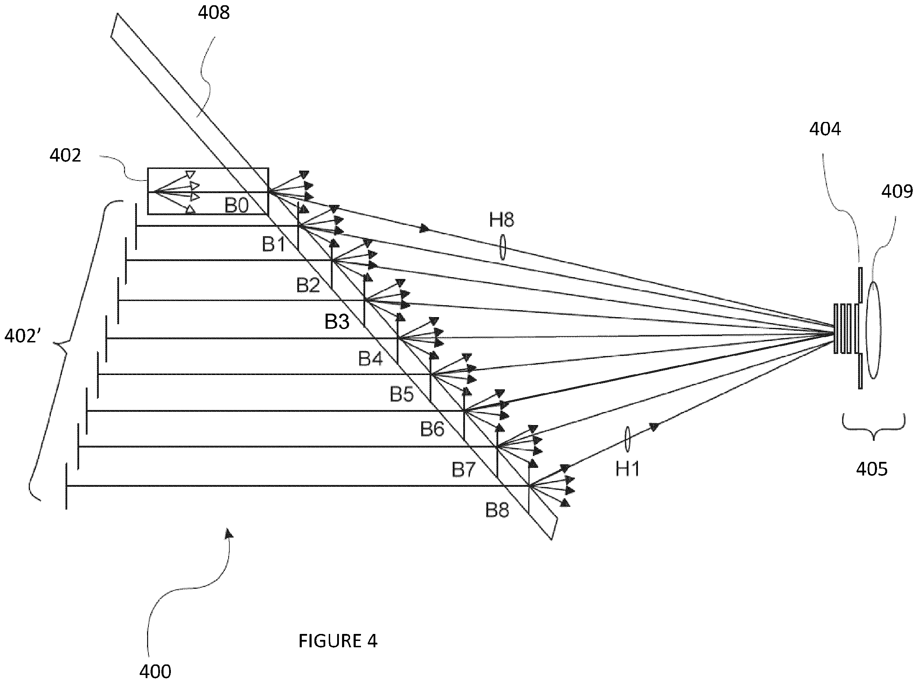

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or `diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

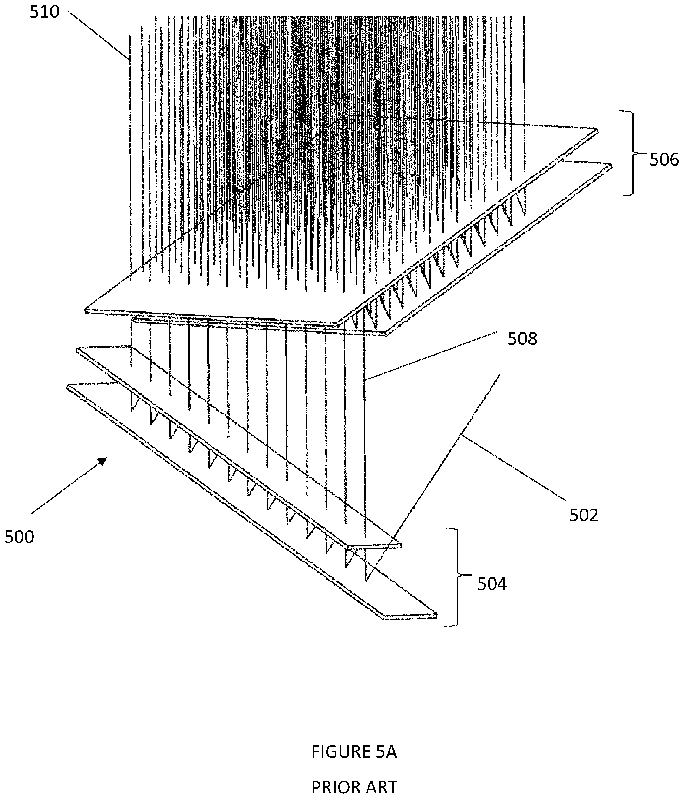

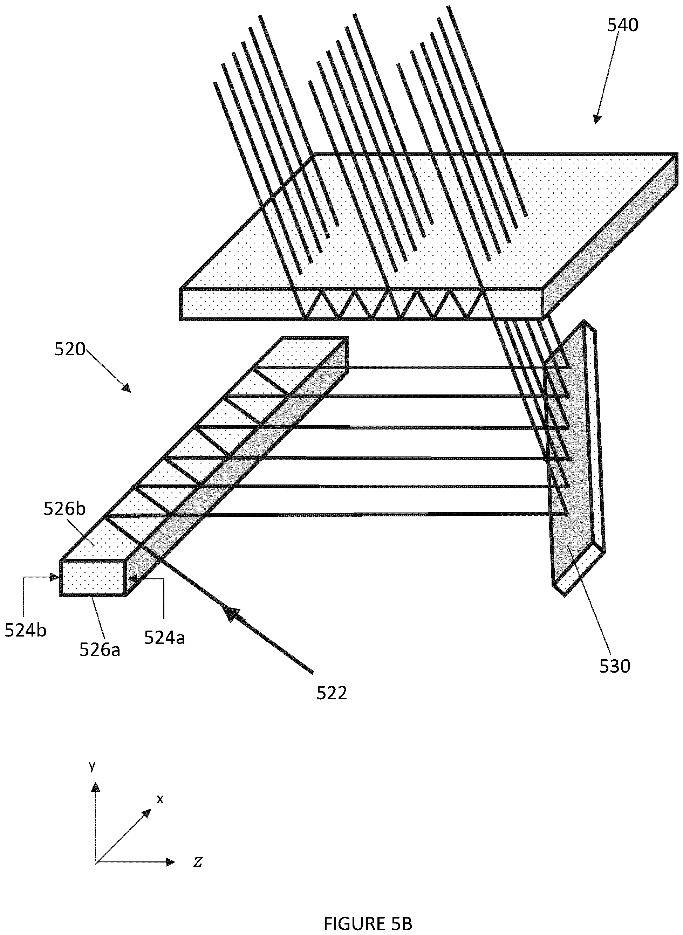

The waveguide 408 forms a plurality of replicas of the hologram, at the respective "bounce" points B1 to B8 along its length, corresponding to the direction of pupil expansion. As shown in Figure 5, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown inFigure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the delivery of hologram light channels, and their replicas, to the eye-box. Each aperture or window may comprise a plurality of liquid crystal cells or pixels.

### Point cloud hologram calculation

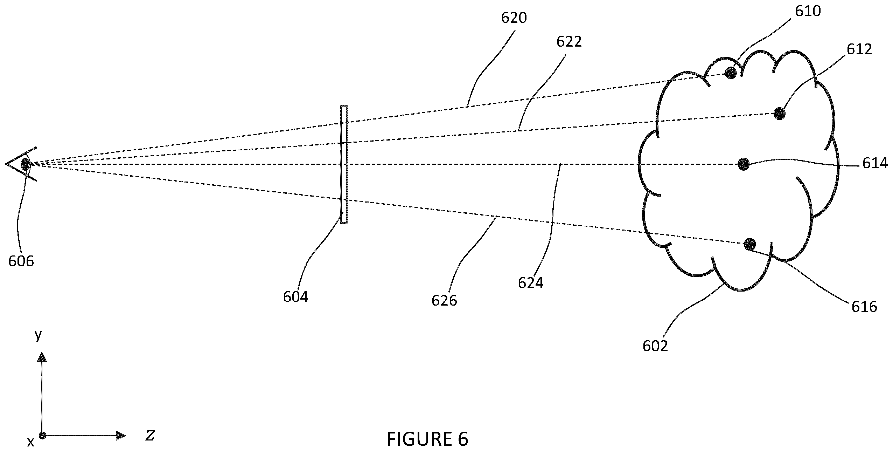

Figure 6 shows a schematic representing a point cloud hologram method. Figure 6 comprises a point cloud 602 (i.e. a cloud of image points), a display device 604 (or hologram plane), and an entrance pupil 606. The display device 604 is positioned between the entrance pupil 606 and the point cloud 602 and, in this example, is a pixellated liquid crystal on silicon spatial light modulator. In this example, the position of the entrance pupil 606 has been determined by eye-tracking of a viewer. The method described herein is performed virtually (i.e. is a simulation). Thus, Figure 6 is merely a representation of what is performed computationally during the point cloud hologram calculation. Furthermore, each of the steps of the method are performed virtually. For example, where it is described that a wave is propagated, a wave is not physically propagated through a physical system. Instead, a virtual wave is virtually propagated in a virtual system. The display device 604 in this example represents the plane at which the hologram will be displayed once it has been calculated. As described in more detail below, the purpose of the point cloud hologram calculation is to determine a hologram that can be (physically) displayed on the display device 604 such that, when the hologram is suitably (physically) illuminated with coherent light, a (physical) holographic wavefront is formed that is relayed to the real entrance pupil of a viewer giving the appearance of a holographic reconstruction of the three-dimension point cloud.

In this example, the point cloud 602 is three-dimensional point cloud, the points representing an object or a scene. In particular, the point cloud 602 is representative of a target picture based on which the hologram is calculated. Four image points are shown in Figure 6: a first image point 610, a second image point 612, a third image point 614, and a fourth image point 616. The first to fourth image points are distributed throughout the point cloud 604. This is merely representative. It should be understood that, typically, a point cloud for a point cloud hologram will comprise thousands or millions of image points that together represent a picture.

A point cloud hologram calculation method typically comprises simulating the propagation of light waves (or wavelets) from each of the image points of the point cloud 604 towards the centre of the entrance pupil 606 along propagation paths. The propagation paths for the first to fourth image points 610 to 614 are represented by the broken lines in Figure 6. A first propagation path 620 extends from the first image point 610 to the entrance pupil 606; a second propagation path 622 extends from the second image point 612 to the entrance pupil 606; a third propagation path 624 extends from the third image point 614 to the entrance pupil 606; and a fourth propagation path 626 extends from the fourth image point 616 to the entrance pupil 606. The skilled reader will be familiar with suitable approaches and algorithms for performing this propagation of light waves.

It should be noted that the optical system of Figure 6 is simplified. In most examples, one or more optical components will be in position between the point cloud 602 / display device 604 and the viewer. The propagation paths may pass through these one or more optical components. For example, the one or more optical components may comprise one or more lenses, one or more mirrors and / or a waveguide, as described above. The point cloud hologram calculation will need to take each of these optical components into account when virtually propagation waves from the image points. Furthermore, Figure 6 is not drawn to scale. For example, in a head-up display for a vehicle, the distance between the display device 604 and the viewer may be 1 metre or more. The distance from the viewer to the point cloud 602 may be further.

After simulating the propagation of light waves, the next step of the method is to obtain complex values at each point on the (virtual) display device 604 or hologram plane. The display device 604 is pixellated. Conventionally, this step of the method comprises determining complex values for each pixel at the display device 604 (or, at least, each pixel of the display device that the wave is incident on). In this example, a phase-only hologram is determined such that phase values are extracted from the complex values for each and every pixel. The skilled reader will be familiar with determining these values. This example is iterative, iterating over each of the image points. In particular, in each iteration, a light wave is propagated from the respective image point and the complex values for each and every pixel at the display device 604 are determined, followed by the phase values. The phase values for each image point are summed, superimposed, accumulated or otherwise combined to output a hologram for the target picture.

The inventors have found that the spatial frequency of a hologram of an image point is dependent on the position of that image point in the target image. Generally, the spatial frequency refers to the variation in the phase and / or intensity of the wavefront / hologram across different positions within the hologram. In this example, the holograms are phase-only holograms and so the spatial frequency refers to the variation in phase.

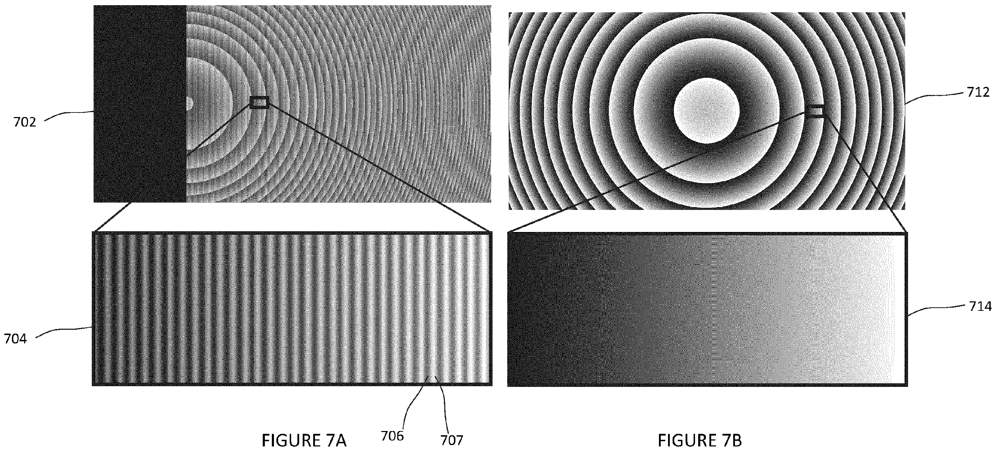

Figure 7A shows a hologram of the first image point 610 of Figure 6 in isolation. Figure 7B shows a hologram of the third image point 614 of Figure 6 in isolation. The top pane 702 of Figure 7A shows the full hologram of the first image point 610. The bottom pane 704 of Figure 7A shows a close-up of a portion of the full hologram of the first image point 610. The top pane 712 of Figure 7B shows the full hologram of the third image point 614. The bottom pane 714 of Figure 7B shows a close-up of a portion of the full hologram of the third image point 614. Both Figures 7A and 7B are greyscale, and both represent how the phase delay applied the hologram spatially varies. In this example, the phase varies from dark (black), representing a phase delay of 0, to light (white), representing a phase delay of 2pi.

As can be seen in Figure 7A and 7B, the spatial frequency of the hologram of the first image point 610 (as shown in Figure 7A) is much higher than the spatial frequency of the third image point 614 (as shown in Figure 7B). In other words, the phase of the hologram of Figure 7A changes much more rapidly than the phase of the hologram of Figure 7B. This difference in spatial frequency becomes particularly evident when comparing the bottom panes 704, 714 of Figures 7A and 7B. In the bottom pane 704 of Figure 7A, the phase is changing by roughly pi between adjacent columns of pixels. See, for example, the difference in darkness between a first column of pixels 706 and a second column of pixels 707 in Figure 7A. However, in the bottom pane 714 of Figure 7B (which is at the same scale as the bottom pane 704 of Figure 7A), the change is phase is much more gradual. The phase changes very smoothly from roughly 0 to 2pi along the full length of the bottom pane 714.

A pixellated display device (such as display device 604) has a field of view which is limited by the wavelength of light and, more importantly for the context of the present disclosure, the pixel pitch (or pixel size) of the display device. As the pixel pitch decreases, the field of view increases. The display device 604 is only able to holographic reconstruct points within said field of view (which corresponds to the maximum diffraction angle of the display device). The hologram of the first image point 610 has a very high spatial frequency because the first image point 610 is towards the edge of the point cloud 602 which, in this example, corresponds to being close to the edge of the field of view of the display device 604 and such that the propagation axis 620 passes through the display device 604 at an angle close to the diffraction limit of the display device 604. The high spatial frequency is needed to diffract light incident thereon to form a reconstructed first image point 610 close to the edge of the field of view (i.e. close to the diffraction limit of the display device 604). Conversely, the image point 610 is towards the centre of point cloud 602 and the associated wave propagates substantially normally to the display device 604. Thus, the spatial frequency is relatively very low (when compared to the hologram of the first image point 610).

The inventors have recognised that, when the spatial frequency of a hologram is low, the hologram can be calculated at lower resolution than the native resolution of the display device 604. In other words, a hologram of low spatial frequency could be under-sampled with only a proportion of the phase values being calculated. For example, one or more empty pixel values may exist between each phase value. The inventors have recognised that, because of the slow and smooth changing nature of the phase of such holograms, it is then possible to accurately interpolate between the calculated phase values (without aliasing issues) to upscale the hologram to the full resolution of the display device 604. The inventors have utilised this concept in their improved method of calculating a point cloud hologram disclosed in the following.

### Improved point cloud hologram calculation method

It would be desirable to be able to calculate point-cloud holograms in real-time such that a sequence of holograms of different target pictures can be calculated and displayed sequentially at a relatively high frame rate (such as, for example, at least 30 frames per second) and at high enough resolution that the reconstruction of the holograms appears good quality. It would also be desirable to achieve this with relatively limited computational resources. For example, a head-up display of a vehicle may have relatively limited on-board computational resources. This has not previously been achievable using conventional point cloud hologram calculation methods. This is because, calculating hologram values at a high resolution using a point cloud method is very computationally expensive. This means that such real-time calculation is not practical, certainly not at high resolution and using a device with relatively limited on-board computation resources. Thus, the inventors have devised the improved point cloud hologram calculation method described herein.

The method proposed by the inventors comprises, for a first subset of image points, determining hologram values using a point cloud method only for every nth pixel, where n is greater than 1 (e.g. every second, third, fourth or fifth pixel). Because point cloud methods (comprising the propagation of a wavelet and the determination of the values) is computationally very expensive, reducing the number of sample points (i.e. the number of pixel values to be determined) significantly reduces the computational burden of determining values at each and every pixel of a display device. The pixels in-between the nth pixels can be filled in using interpolation based on the determined (nth) pixels.

The first subset of image points are arranged / selected such that each image point of the first subset has an associated diffraction angle for use in the point cloud method, each diffraction angle being less than a maximum diffraction angle of the display device. As described, this is such that the hologram can be under-sampled and interpolated without aliasing issues. Herein, two examples of image points forming such a first subset are described.

### First Example

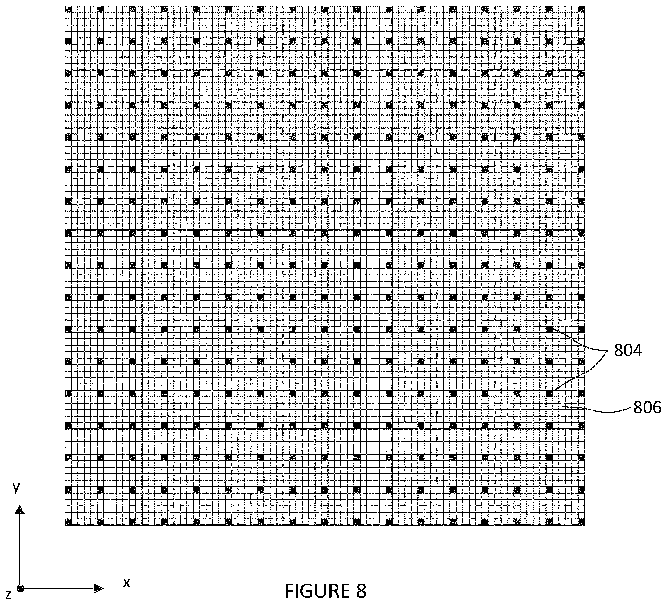

In a first example, a first subset of image points each having an associated diffraction for use in the point cloud method that results in a relatively low spatial frequency is achieved simply by selecting the first subset of pixels as pixels which are relatively close to the centre of a field of view / centre of the target picture and applying the improved method to only those pixels. For example, the first subset of image points could comprise image point 614 but not image point 610 or 616. Because the first subset of image points are selected in this way, the hologram that will be calculated has a low spatial frequency and can be under-sampled, as described above. A portion of an under-sampled hologram displayed on a display device is shown in Figure 8.

The grid of Figure 8 represents the pixels of the pixellated display device. Each square of the array represents a pixel. The black / filled-in squares 804 of the array represent pixels for which complex / phase values have been determined in the initial hologram calculation (following the propagation of the wave along propagation path). The white / empty squares 806 represent pixels for which complex / phase values have not been determined. Each black square 804 is separated from its nearest neighbour black squares by four white (empty) squares 806 in the x direction and the y direction, in this example. In other words, pixel values have been determined for every 5^{th} pixel. Thus, Figure 8 demonstrates how under-sampling can be used to dramatically reduce the number of pixels for which complex / phase values need to be determined during the initial hologram calculation. This saves a substantial amount of compute time and results in the hologram calculation being considerably more efficient. As above, the hologram determined in Figure 8 is of very low spatial frequency. Thus, values for the empty squares / pixels 806 can accurately be determined based on the known values in the black square 804 using interpolation. For example, a bicubic interpolation scheme can be used for the interpolation.

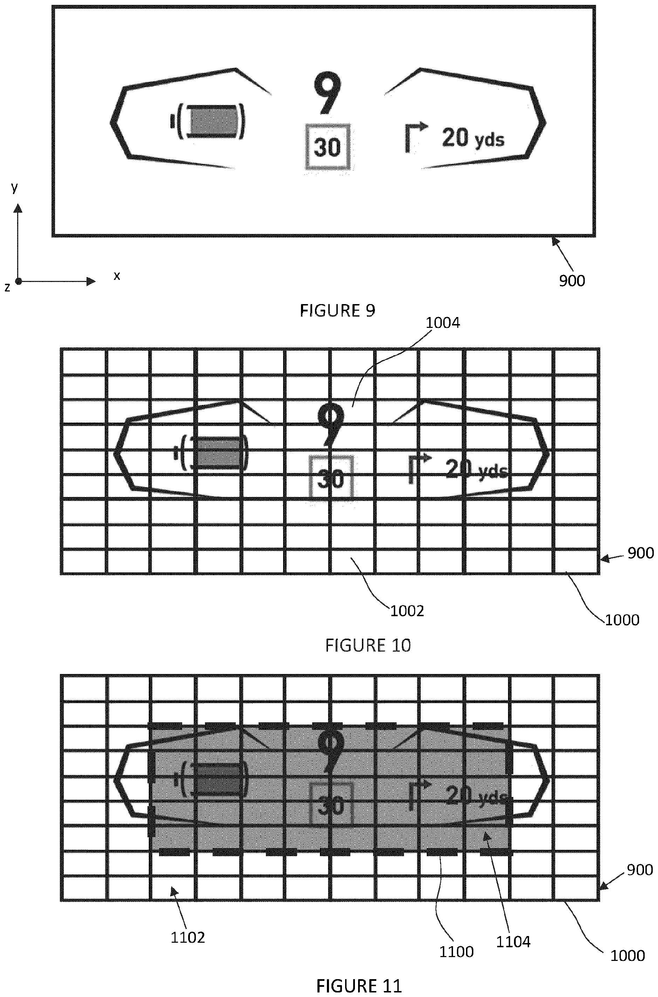

In order to further describe the improved method of calculating a hologram of a target picture, Figures 9 to 11 represent steps of the hologram calculation for a specific target picture (rather than the generic single point 610 as in in Figure 6). Figure 9 shows the target picture 900 of this example. The point cloud of Figure 6 is shown in a y-z plane. This target picture 900 of Figure 9 is instead in an x-y plane. Thus, the view of the target picture 900 in Figure 9 is effectively a head-on view of the target picture 900 from the point of view of the viewing sys (rather than a side on view). So, as such, the target picture 900 in Figure 9 appears two-dimensional. In some examples, the target picture 900 may also have depth in the z-direction and so may be three-dimensional.

The target picture 900 of Figure 9 is for a head-up display for a vehicle and so comprises information that is useful for a driver of a vehicle. This includes speed information, charge status of the vehicle and directional information. The target picture 900 is a cloud of points (or point cloud). However, because the target picture 900 is high resolution, individual image points cannot be distinguished at the scale of the target picture 900 shown in Figure 9.

In this example, an initial step in the method for calculating the hologram comprises dividing the target picture into a plurality of portions or cells. Figure 10 shows the target picture 900 divided into an array of cells 1000. In this example, the array of cells 1000 comprises 12 by 9 cells extending in the x and y direction, respectively. In this example, dividing the target picture into a plurality of cells comprises defining angular ranges from the viewer to the target picture (using ray tracing). This step is performed virtually. Neighbouring angular ranges are adjacent to one another (abutting one another) and do not overlap. In this example, each angular range is equal in extent in both the x and the y direction to every other angular range. In other words, each cell is substantially equal in size.

The method further comprises identifying which image points of the target picture 900 fall into which cell. In this example, some cells (such as cell 1002) do not contain any image points. Other cells (such as cell 1004) do contain image points. Cells which do not contain any image points can be effectively ignored in the method. The image points contained in an individual cell may be referred to as a subset of image points.

In this example, the method for calculating the hologram then comprises calculating a sub-hologram for each cell (or, at least each cell that contains image points). In other words, the method comprises calculating a sub-hologram for each subset of image points. In this example, different approaches will be used to calculate the sub-hologram for different cells / subsets of image points. In particular, sub-holograms for cells in a central portion 1104 of the target image are calculated using the improved method of the present disclosure whereas sub-holograms for cells in an outer portion of the target image are calculated using a conventional point cloud method.

Figure 11 shows the outer portion 1102 and the central portion 1104. A border 1100 between the outer portion 1102 and the central portion 1104 is represented by a broken / dashed line. Cells in the central portion 1104 are shaded in grey for illustrative purposes, in order to distinguish between cells of the inner and outer portions 1102, 1104.

Image points in cells in the central portion 1104 are closer to the centre of the target image 900 than image points in cells in the outer portion 1102. Thus, angles made by propagation paths for image points in cells in the central portion 1104 will be closer to zero than the angels made by propagation paths for image points in cells in the outer portion 1102 (which will instead be closer to a maximum diffraction angle of the display device on which the hologram is displayed / displayable). This means that the spatial frequency of sub-holograms for cells in the central portion 1104 is less than the spatial frequency of sub-holograms for cells in the outer portion 1102. Thus, the sub-hologram for cells in the central portion 1104 may be calculated according to a method of the present disclosure (comprising under-sampling and then interpolation) because the spatial frequency may be low enough that the interpolation does not cause significant aliasing issues. Conversely, the spatial frequency of the sub-hologram for cells in the outer portion 1102 may be too high for interpolation to be used without causing significant aliasing issues.

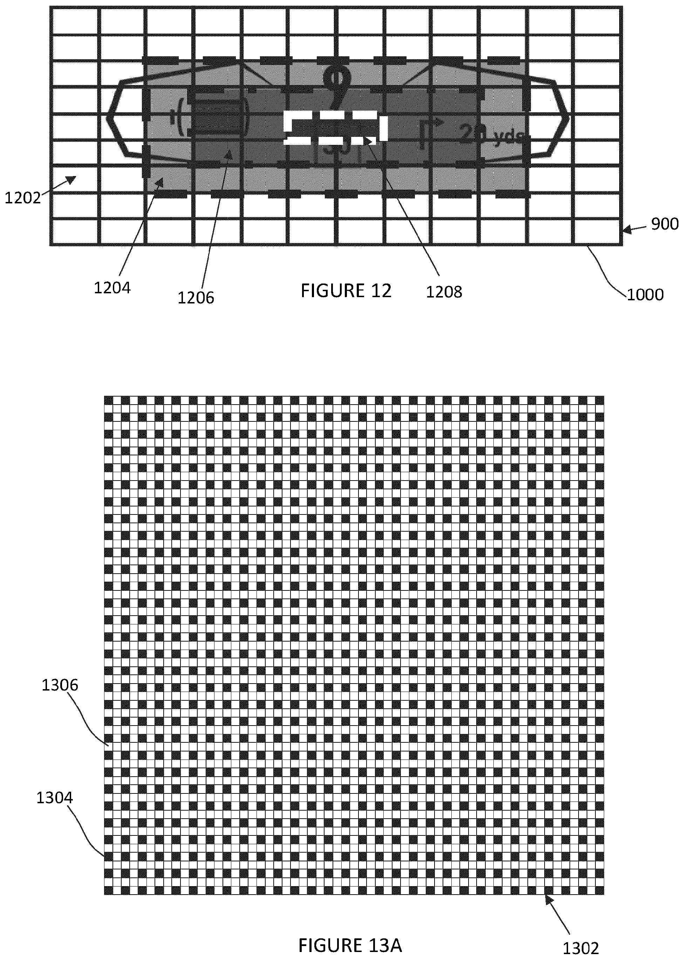

In summary, in the example of Figure 11, different image points of the target picture are treated differently in the hologram calculation depending on how close those image points are to the centre of the target picture. In particular, the inventors have recognised that, for points closer to the centre of the target picture, it is possible to under-sample the values of the sub-hologram initially. Figure 12 and 13A to 13C show an extension of this idea. In particular, the inventors have recognised that a balance must generally be struck between maximising the initial under-sampling (for computational efficiency) without causing aliasing issues. The inventors have recognised that this balance can change on a cell-by-cell basis, depending on the proximity of the cell to the centre of the target picture. In the example shown in Figure 12 and 13A to 13C, this effect is utilised such there are three different zones of under-sampling. Sub-holograms of cells in the different zones or portions are under-sampled to a different extent.

In more detail, the example of Figure 12 comprises an outer portion 1202, a first central portion 1204, a second central portion 1206, and a third central portion 1208. Each portion is co-centric with every other portion and with a centre of the target picture. A first boundary exists between the outer portion 1202 and the first central portion 1204. A second boundary exists between the first central portion 1204 and the second central portion 1206. A third boundary exists between the second central portion 1206 and the third central portion 1208. The first, second and third central portions are represented by grey shading which is darker for portions closer to the centre of the target picture. This shading is for illustrative purposes only.

As described previously, the calculation of a hologram of the target picture comprises calculating a sub-hologram of the image points of each cell. As in the previous example, sub-holograms of cells in the outer portion 1202 are calculated using a conventional point cloud technique, at full resolution (i.e. without under-sampling and subsequent interpolation to achieve full resolution). Sub-holograms of cells in each of the first to third central portions 1204 to 1208 are calculated using a method according to the present disclosure (comprising initial under-sampling and a subsequent interpolation).The extent of the interpolation increases for each successive central portion.

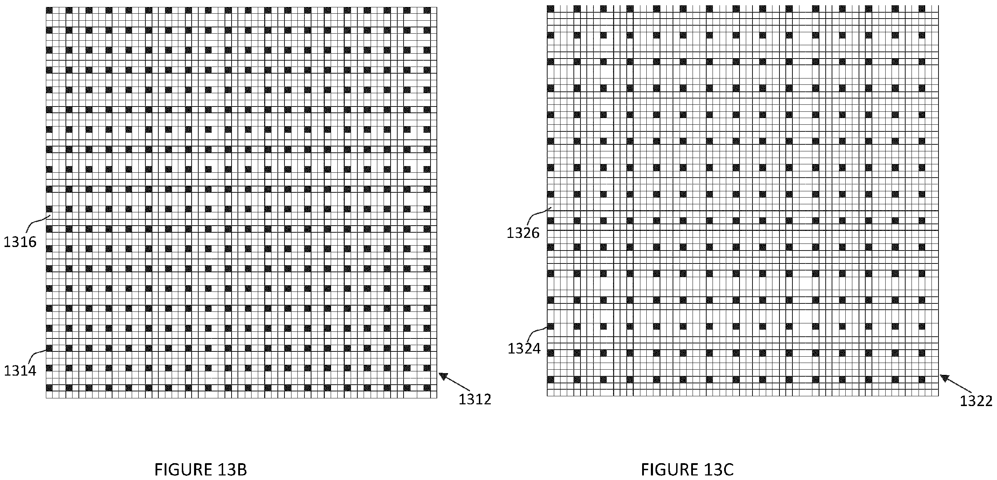

In one example, determining a sub-hologram of image points of cells in the first central portion 1204 comprises initially using a point cloud method to determine values for every other pixel (i.e. ever second pixel). Determining a sub-hologram of image points of cells in the second central portion 1206 comprises initially using a point cloud method to determine values for every third pixel. Determining a sub-hologram of image points of cells in the third central portion 1208 comprises initially using a point cloud method to determine values for every fourth pixel. Such sub-holograms (prior to interpolation) are shown in Figures 13A to 13C. In particular, Figure 13A shows a portion of a sub-hologram 1302 for a cell in the first central portion 1204, in which the sub-hologram values 1304 are determined for every other cell. In between each value 1304 is a non-determined or intermediate pixel 1306 (in both an x-direction and a y-direction). Figure 13B shows a portion of a sub-hologram 1312 for a cell in the second central portion 1206, in which the sub-hologram values 1314 are determined for every third cell. In between each value 1314 is two non-determined or intermediate pixels 1316 (in both an x-direction and a y-direction). Figure 13C shows a portion of a sub-hologram 1322 for a cell in the third central portion 1208, in which the sub-hologram values 1324 are determined for every fourth pixel. In between each value 1324 are three non-determined or intermediate pixels 1326 (in both an x-direction and a y-direction).

More generally, determining a sub-hologram of image points of cells may be described as comprising the step of determining, using a point cloud method, a value for every nth pixel of a hologram. In the above example, n is 2 for the first central portion 1204; n is 3 for the second central portion 1206; and n is 4 for the third central portion 1208. It should be understood that these values for n are merely exemplary. Furthermore, there being three central portions is also exemplary. There could be any number of central portions and any number of values for n.

In summary, Figure 12 and 13A to 13C shows an example in which the value of n is dependent on the position of the cell. Specifically, n increases for cells closer to the centre of target picture.

### Second Example

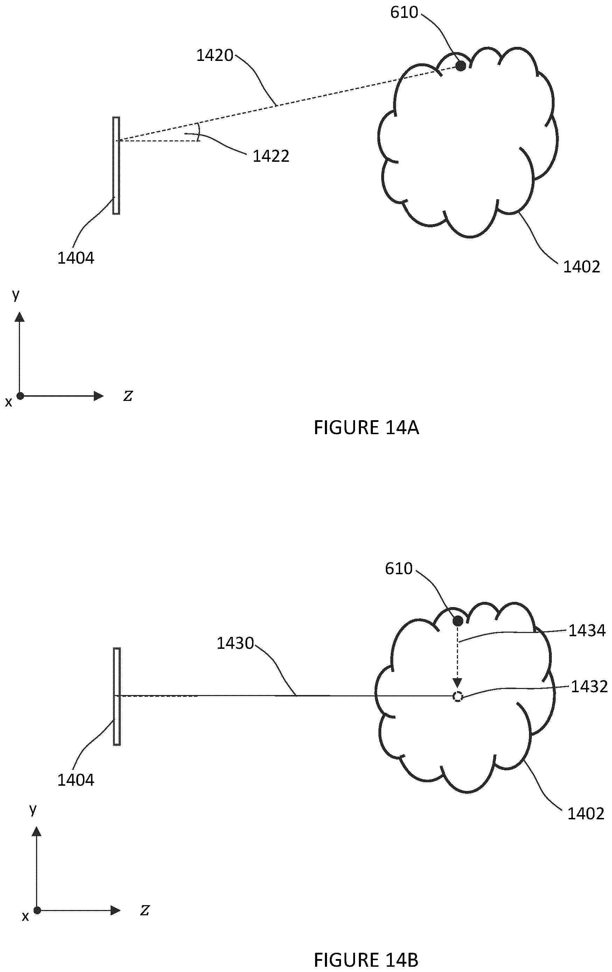

In a second example, a first subset of image points each having an associated diffraction for use in the point cloud method that results in a relatively low spatial frequency is achieved by processing the first image points to reduce the angle made by the propagation path. In particular, instead of propagating the wave from the image point along a propagation path towards the entrance aperture of a viewer (such that the propagation path makes a relatively large angle with the display device), a different propagation path is used. The propagation path used in the point cloud method is arranged to make a reduced angle with the display device. This means that the starting point of the propagation path is not the image point in the target image. Another way of describing this is that the image point of the first subset is effectively moved in the target image. Figure 14A and 14B demonstrate this in relation to a single image point.

Figure 14A and 14B both represent a point cloud hologram calculation for the single image point. Figure 14A and 14B both comprise a point cloud 1402 and a display device 1404. The entrance pupil is not shown in Figure 14A and 14B. The point cloud of Figure 14A comprises the first image point 610 of Figure 6 which has a light-ray path 1420 extending therefrom. The light-ray path 1420 corresponds to the propagation path 1420 of Figure 6 and, in this example, is a path which has been determined using ray tracing from the first image point 710 to the entrance aperture (not shown in Figure 8A), through the display device 1404. The wave for the hologram is not propagated along the light-ray path 1420. Figure 14A shows the angle 1422 made by the light-ray path 1420 and a normal of the display device 1404. The angle 1422 is exaggerated in Figure 14A. The point is that the angle is non-zero and is approaching the diffraction limit of display device 1404.

Figure 14B shows the actual propagation path 830 used in the point cloud hologram calculation (rather than the light-ray path 1420). The propagation path 1430 is arranged to be substantially normal to the display device 1404. In other words, the angle 1422 has been reduced (to substantially zero). This means that the propagation path 1430 does not extend from the first image point 610. Instead, the propagation path 1430 has starting point 1432, represented by the broken circle in Figure 8B. Once a wave has been propagated along propagation path 1430, complex values and phase values are determined on the display device 1404 or hologram plane in a manner which will be familiar to the skilled reader. The complex / phase values that will be calculated are effectively values for a hologram of an image point at the starting point 1432 of the propagation path 1430, rather than for an image point in the position of the first image point 610. Thus, it may be said that the first image point 610 is effectively moved to the starting point 1432 as part of the hologram calculation method. This movement is represented by arrow 1434 in Figure 14B. A hologram of an image point at the starting point 1432 will have relatively very low spatial frequencies and, in fact, will appear similar to the hologram of Figure 7B rather than the hologram of Figure 7A.

Without further processing, a hologram calculated as described in relation to Figure 14B and displayed on a display device and suitably illuminated would form a reconstruction of the first image point 610 substantially centrally in the field of view of the system. This is not consistent with the position of the first image point 610 in the target image which (as shown in Figure 6 and 14A) is positioned towards the edge of the point cloud 1402. The inventors have recognised that the original or intended position in the point cloud 1402 can be recovered by further processing the hologram to translate the reconstructed point. For example, one or grating functions or phase-ramp functions can be added to the hologram. In some examples, a first grating function may be added to the hologram to translate the reconstructed point in a first dimension (e.g. an x-direction) and a second grating function may be added to the hologram to translate the reconstructed point in a second dimension (e.g. a y-direction). The use of phase-ramp functions to translate image points will be familiar to the skilled reader. It is straightforward to select a gradient or phase-ramp function that compensates for the reduction in the angle of the propagation path 1430 because the reduction in angle is already known from the hologram calculation process. Thus, phase-ramp functions the reverse / compensate for the reduction can readily be determined / selected.

The second example may be used to calculated sub-holograms of cells of a target image in a similar way to what is described above in relation to Figures 9 and 10. In particular, the method comprises an initial step of dividing the target picture into a plurality of portions or cells. In this example, dividing the target picture into a plurality of cells comprises defining angular ranges from the viewer to the target picture (using ray tracing). This step is performed virtually. Neighbouring angular ranges are adjacent to one another (abutting one another) and do not overlap. In this example, each angular range is equal in extent in both the x and the y direction to every other angular range. In other words, each cell is substantially equal in size. In this example, the method further comprises identifying which image points of the target picture 900 fall into which cell. In this example, some cells (such as cell 1002) do not contain any image points. Other cells (such as cell 1004) do contain image points. Cells which do not contain any image points can be effectively ignored in the method. The image points contained in an individual cell may be referred to as a subset of image points.

In some examples, the method for calculating the hologram then comprises calculating a sub-hologram for each cell (or, at least each cell that contains image points). In other words, the method comprises calculating a sub-hologram for each subset of image points. In some examples, the approach of the second example is applied to a plurality of the cells. In some examples, the approach of the second example is applied to substantially all of the cells (except, perhaps, the cell at the very centre of target picture which is already as close to the centre as it can be).

A benefit of the second example, compared to the first example, is that the second example can be used to calculate a hologram or sub-hologram for all image points of the target picture at a low spatial frequency originally. In particular, the second example can be applied to image points which appear at the extreme outer portion of the target picture such that a hologram of these points has as low spatial frequency as a hologram of image points closer to the centre. Another benefit of the second example, compared to the first example, is that the extent of the under-sampling can always be maximised. For example, as described above in relation to the first example, there is a balance to be struck between maximising the interpolating without causing aliasing issues. "n" (i.e. the parameter defining the proportion of pixels the are calculated in the point cloud method) can increase the closer the image point is to the centre (hence the different zones or portions shown in Figure 12). In the second example, however, the point cloud method can be performed as if the image point is substantially at the centre of the target picture regardless of where the image point actually is in the target picture. In other words, any image point may arbitrarily moved closer to the centre of the target picture before the point cloud method is applied. As such, in the second example, n may be maximised for all image points.

In some examples, the hologram calculation may involve a combination of the two examples described above. For example, the first example may be applied to subsets of image points closer to the centre of the target picture and the second example be applied to subsets of image points closer to the outer perimeter of the target picture. For example, turning to Figure 11, the first example may be applied to subsets of image points in cells in the central portion 1104 and the second example may be applied to subsets of image points in cells in the outer portion 1102.

### Implementation of improved point cloud method

Thus far, examples of an improved point cloud method have been described in relatively general terms. In particular, several examples of calculating a hologram (or sub-hologram) of a first subset of image points of a target picture have been described in which the first subset of image points have an associated diffraction angle that is less than a maximum diffraction angle of a display device such that the hologram has a low enough spatial frequency that the hologram can be initially under-sampled and then interpolated up to a full resolution. Herein, the specific details of examples of implementing the improved point cloud method will be described. These examples are particularly advantageous. The inventors have developed these methods to be computationally efficient.

An example specific implementation of the improved point cloud hologram comprises three accumulators or accumulations. Each accumulator is for performing an iterative process involved in the hologram calculation. As described above, the first step of the method of calculating the hologram comprises dividing the target picture into an array of cells, each cell comprising a plurality of image points. In general terms, the first accumulator is arranged to iterate over all the image points of a subset of image points (for example, to iterate over all the image points in a first cell of the array of cells). The first accumulator thus determines values for a hologram of the respective subset or cell of image points. In this example, the holograms determined by the first accumulator (using a point-cloud technique) are under-sampled in both first and second directions (e.g. x and y directions). In this example, the first accumulator is arranged to interpolate in the first direction but not the second direction. The second accumulator is arranged to repeat the first accumulation for each cell of the array of cells extending in a first direction (i.e. each cell in a row or column of cells). The second accumulator is arranged to receive and combine the hologram values determined in each iteration of the first accumulator. The second accumulator is then arranged to interpolate the values in the second direction. The third accumulator is arranged to repeat the second accumulation for sets of cells extending in the first direction of the array of cells. Thus, if the second accumulator is arranged to repeat the first accumulation for a first rows of cells, the third accumulator repeats the second accumulation for each remaining row of cells, and vice versa. After the third accumulation, a full resolution hologram of the full target picture is output.

The above described implementation is computationally efficient. It minimises the number of interpolation steps that need to be performed to achieve a full resolution hologram and so efficiently implements the improved hologram calculation method (comprising under-sampling and interpolation) described above.

Furthermore, the implementation allows for grating functions (or phase-ramp functions) to be applied to the hologram while minimising the number of interpolation steps to be performed. In particular, the implementation allows for different grating functions to be applied to sub-holograms of different cells or portions of the target picture. It may be desirable to apply grating functions to the hologram to achieve a beam-steering effect, as the skilled reader will be familiar. This could be to move content within a replay field of a holographic projector according to need. For example, this movement may be based on an instruction from a user. The movement may be to compensate or calibrate for a physical change in the holographic projector for example as result of a change in temperature of the holographic projector or warping of an optical combiner, for example. This may require different grating functions to be applied to (sub-)holograms of image points contained in different cells (because the warping may be non-uniform, for example). Another example in which different grating functions may need to be applied to different cells is when grating functions are used to compensate for movement of the image points of the target image in the point cloud method (as shown in Figure 14A and 14B). In such cases, image points in different cells may be moved by different amounts to bring them substantially to the centre of the target picture. In any case, the inventors have recognised that it would not be possible to simply add the grating functions at the end

In any case, the inventors have recognised that the required movement may be divided into an x-direction and a y-direction. A first grating function may be used to achieve the required movement in the x-direction. A second grating function may be used to achieve the requirement movement in the y-direction. The inventors have developed a method which does this in a computationally efficient manner.

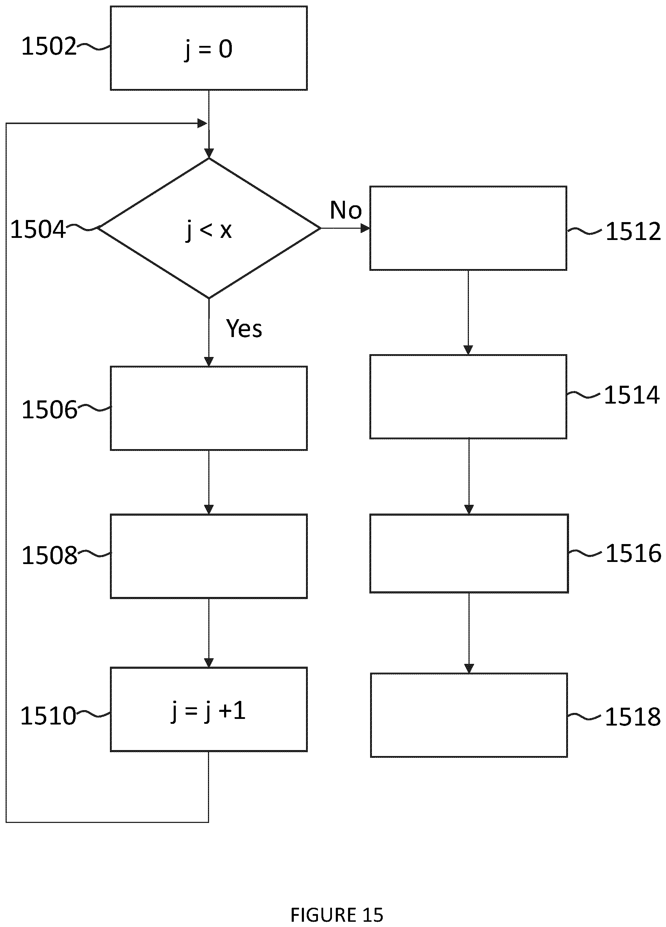

The implementation (including the three accumulators) will now be described in more detail with reference to Figures 15 onwards.

### First accumulator

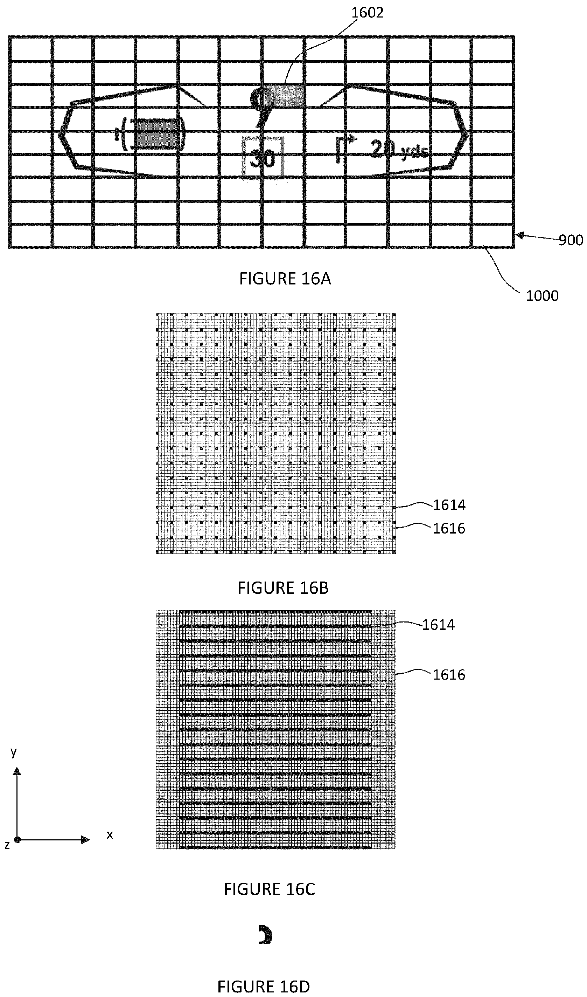

Figure 15 is a flow diagram representing a first accumulation 1500 as applied to an individual cell of a target picture. In the description below, the first accumulation 1500 is applied to cell 1602 of target picture 900, as shown in Figure 16A. Cell 1602 is shaded in grey in Figure 16 for illustrative purposes. Cell 1602 comprises image points forming a portion the number 9.

Step 1502 of the first accumulation 1500 comprises setting a counter, j, to zero. This counter is stored in a memory of a hologram engine arranged to perform the hologram calculation method (not shown in the drawings).

Step 1504 of the first accumulation 1500 comprises comparing the current value of counter, j, to the number image points, x, contained in cell 1602. Optionally, the first accumulation comprises determining the number of image points, x. Alternatively, the number of image points, x, for cell 1602 may have previously been determined or identified and may be contained in the memory of the hologram engine. For example, the number of image points in each cell may have been previously identified when the target image was divided into the array of cells. The hologram engine may have been arranged to count the number of image points in each cell and store that count in a memory.

If j is less than x, the first accumulation moves to step 1506. If j is equal to or greater than x, then the first accumulation moves to step 1512.

Step 1506 of the first accumulation 1500 comprises using a point cloud method to (virtually) propagate a wave along a propagation path associated with a j^{th} image point of the first cell 1602. In some examples, the propagation path is defined from the j^{th} image point of the first cell 1602 to an aperture of a viewing system which may have been determined using an eye-tracker. This is in accordance with what was described Figure 6. In other examples, some processing may have been applied such that the angle made by the propagation path and the display device is reduced. In effect, the j^{th} image point may have been moved to be closer to or substantially at a centre of the target picture 900. This is in accordance with the example described in relation to Figures 14A and 14B. The processing of the jth image points and / or the associated propagation path may have been performed before the first accumulation or during step 1506 of the first accumulation. In other examples, each of the propagation paths used in the point cloud method, associated with the j^{th} image point, is such that it makes an angle with the display device 604, 1404 that is less than, optionally much less than, a maximum diffraction angle of the display device 604, 1404. The maximum diffraction angle of the display device 604, 1404 is determined by a pixel pitch of the display device and is defined with respect to a normal of the display device. Optionally, the angle may by each propagation path and the display device is substantially zero. In any case, the angle of the propagation path associated with the j^{th} image point is such that the hologram values have a relatively low spatial frequency. The hologram values are then determined for every 5^{th} pixel of the display device in both the x direction and the y direction in this example. In other words, the hologram values determined in step 1506 are determined at a reduced resolution relative to the native resolution of the display device 604, 1604 in both the x direction and the y direction. In other words, the hologram values are under-sampled.

The output of step 1506 is shown in Figure 16B. Figure 16B shows a portion of a hologram in which hologram values have been determined for every 5^{th} pixel. Pixels 1614 for which hologram values have been determined in step 1506 are represented by black squares in Figure 16B. Pixels 1616 for which hologram values have been not determined in step 1506 are represented by white squares in Figure 16B.

Step 1508 of the first accumulation 1500 comprises storing the hologram values output in step 1506 in a memory of the hologram engine. If hologram values are already stored in the memory for the respective pixels (because an iteration of the first accumulation has already been performed for a previous image point 1614) then step 1508 comprises adding (i.e. accumulating or summing or superimposing) the hologram values for each pixel 1614 for the j^{th} image point to the currently stored hologram value for that pixel. Thus, each value of each pixel may effectively be a running total combining the values calculated for that pixel for each image point.

Step 1510 of the first accumulation comprises increasing the counter, j, by one. The first accumulation then returns to step 1504.

Steps 1504 to 1510 of the first accumulation 1500 are repeated for each image point, j, of the first cell 1602. For each iteration, a point cloud method is used to propagate a wave along a propagation axis for the j^{th} image point and hologram values are determined for that j^{th} image point at a reduced resolution in both x and y. In each iteration, new hologram values are determined at step 1506. These are added to the hologram value already stored in the memory in step 1508. Thus, hologram values for pixels 1614 accumulate in the memory over time (hence the term "accumulator").

The first accumulator continues iterating steps 1504 to 1510 for each image point until j equals x. When j equals x, the first accumulator moves to step 1512 instead of step 1506.

In this example, step 1512 of the first accumulator 1500 comprises performing an interpolation in the x direction only. In examples, a bicubic interpolation scheme can be used for the interpolation. The interpolation is used to determine hologram values for pixels 1616 in the x direction between pixels 1614. The result of this is represented in Figure 16C in which pixels 1614 for which hologram values have been determined extend in continuous rows. In other examples, step 1512 of the first accumulator 1500 comprises performing an interpolation in the y direction only.

In this example, step 1514 of the first accumulator 1500 comprises applying a first grating function to the pixels 1614 of Figure 16C (but not to the pixels 1616 of Figure 16C between rows of pixels 1614). It is important that the interpolation of step 1512 is performed before the first grating function of step 1514 is applied. This is because the first grating function is effectively a high frequency function. Thus, if the first grating function is applied before the interpolation, the high frequency of the first grating function may cause aliasing issues in the interpolation.

At step 1516 of the first accumulator 1500, the hologram values of step 1514 are output to the second accumulator and the memory used by the first accumulator is cleared. The hologram values output in step 1516 are at substantially full resolution in the x direction (because the interpolation has been performed in the x direction) but are at reduced resolution in the y direction. The hologram values also include a first grating function.

If the output of step 1516 were displayed on a display device (such as a liquid crystal on silicon spatial light modulator) and suitably illuminated, a holographic reconstruction of the image points of cell 1602 would be formed. This is what is shown in Figure 16D.

At step 1518 of the first accumulation 1500, the memory used in the first accumulation is cleared.

### Second Accumulator

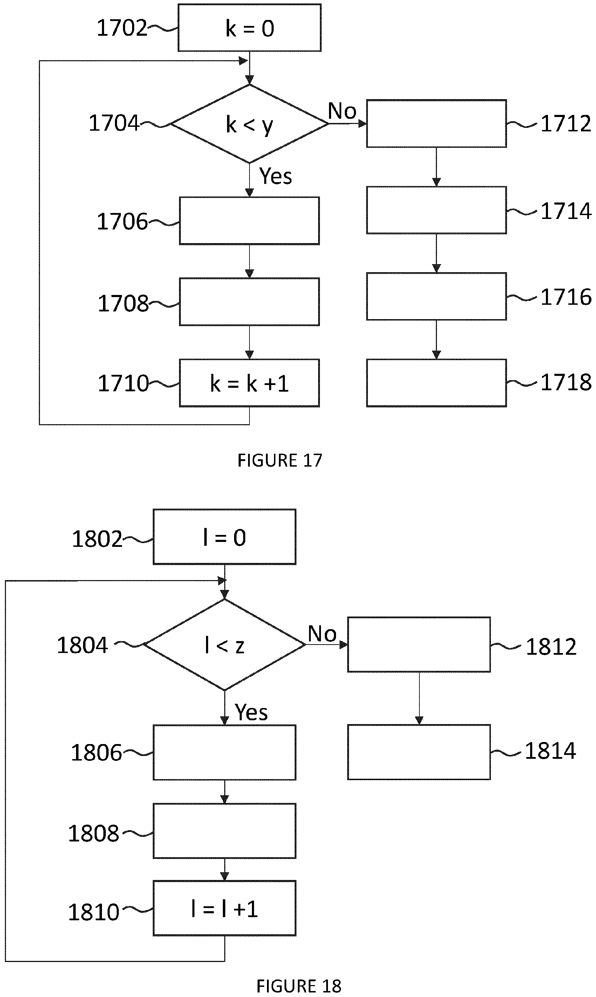

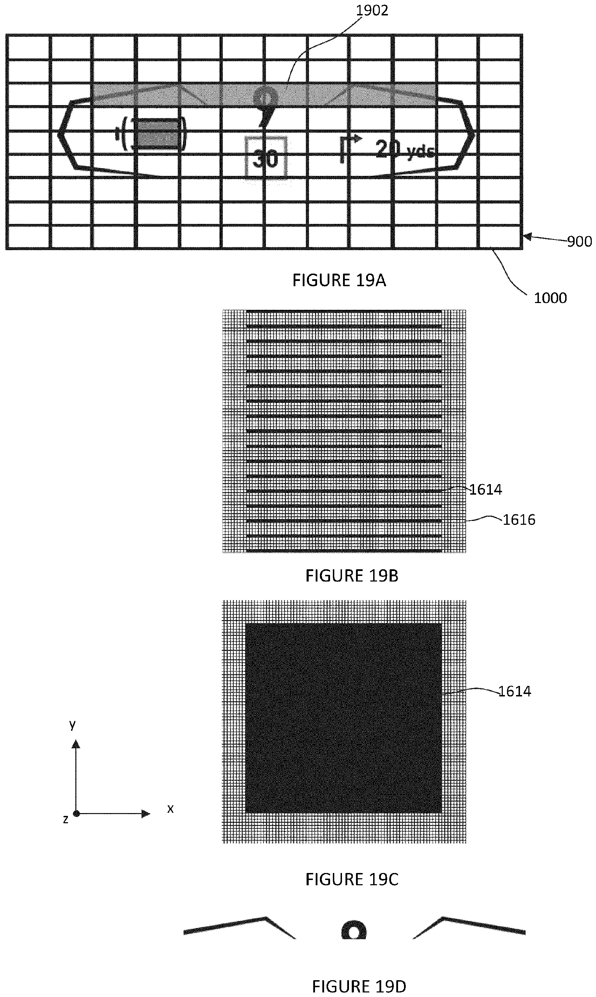

Figure 17 is a flow diagram representing a second accumulation 1700 as applied to a row of cells of a target picture. In the description below, the second accumulation 1700 is applied to a row of cells 1902 of the target picture 900, as shown in Figure 19A. Row of cells 1902 is shaded in grey in Figure 19 for illustrative purposes. Row of cells 1902 comprises image points forming a top portion the number 9 and top portions of two border graphics.

Step 1702 of the second accumulation 1700 comprises setting a counter, k, to zero. This counter is stored in a memory of a hologram engine arranged to perform the hologram calculation method (not shown in the drawings).

Step 1704 of the second accumulation 1700 comprises comparing the current value of counter, k, to the number of cells in the row of cells 1902, y. In this example, there are 8 individual cells in row of cells 1902. So, y = 8 in this example.

If k is less than y, the second accumulation 1700 moves to step 1706. If k is equal to or greater than y, then the second accumulation 1700 moves to step 1712.

Step 1706 of the second accumulation comprises performing the first accumulation 1500 for the kth cell of the row of cells 1902. Thus, the second accumulation 1700 effectively comprises performing the first accumulation 1500 (optionally, for a plurality of iterations).

As per step 1516 of the first accumulation 1500, the hologram values determined in the first accumulation 1500 are output to the second accumulator. Thus, step 1708 of the second accumulation 1700 comprises receiving the hologram values determined in the first accumulation. Step 1708 of the second accumulation 1700 further comprises storing the hologram values in a memory of the hologram engine. If hologram values are already stored in the memory for the respective pixels (because a first accumulation has already been performed for a previous cell in the row of cells 1902) then step 1708 comprises adding (i.e. accumulating or summing or superimposing) the hologram values for each pixel 1614 to the currently stored hologram value for that pixel. Thus, each value of each pixel may effectively be a running total combining the values calculated for that pixel for each cell in the row of cells.

Step 1710 of the second accumulation comprises increasing the counter, k, by one. The second accumulation then returns to step 1704.

Steps 1704 to 1710 of the second accumulation 1700 are repeated for each cell, k, of the row of cells 1902. For each iteration, the first accumulation is performed for the kth cell and new hologram values are determined in the first accumulation which are added to the hologram values already stored in the memory of the hologram engine for the second accumulation.

The hologram values at step 1708 of the second accumulation are represented in Figure 19B. Because the hologram values determined at step 1708 correspond to the output of the first accumulation, Figure 19B corresponds to Figure 16B. In other words, Figure 19B shows a portion of a hologram in which hologram values have been determined for every 5^{th} pixel. Pixels 1914 for which hologram values have been determined in step 1708 are represented by black squares in Figure 19B. Pixels 1916 for which hologram values have been not determined are represented by white squares in Figure 19B.

The second accumulator continues iterating steps 1704 to 1710 for each cell until k equals y. When k equals y, the second accumulator moves to step 1712 instead of step 1706.

In this example, step 1712 of the second accumulation 1700 comprises performing an interpolation in the opposite direction to what was performed in the first accumulator. As the interpolation of the first accumulation in this example was in the x direction only, the interpolation performed by the second accumulation is in y direction only in this example. In examples, a bicubic interpolation scheme can be used for the interpolation. The interpolation is used to determine hologram values for pixels 1616 in the y direction between rows of pixels 1614. The result of this is represented in Figure 19C in which pixels 1614 for which hologram values have been determined extend in a continuous two-dimensional block. In other examples, step 1712 of the second accumulation 1700 comprises performing an interpolation in the y direction only (if the interpolation performed in the first accumulation is in the x direction only).

In this example, step 1714 of the second accumulation 1700 comprises applying a second grating function to the pixels 1614 of Figure 19C. It is important that the interpolation of step 1712 is performed before the second grating function of step 1714 is applied. This is because the second grating function may effectively be a high frequency function. Thus, if the second grating function is applied before the interpolation, the high frequency of the second grating function may cause aliasing issues in the interpolation.

At step 1716 of the second accumulation 1700, the hologram values of step 1714 are output to the third accumulation and the memory used by the second accumulator is cleared. The hologram values output in step 1516 are at substantially full resolution in the x and y direction (because the interpolation has been performed in the x and y direction in the first and second accumulations, respectively). The hologram values also include one or more grating functions.

If the output of step 1716 were displayed on a display device (such as a liquid crystal on silicon spatial light modulator) and suitably illuminated, a holographic reconstruction of the row of cells 1702 would be formed. This is what is shown in Figure 19D.

At step 1718 of the second accumulation 1700, the memory for the second accumulation is cleared.

### Third Accumulator

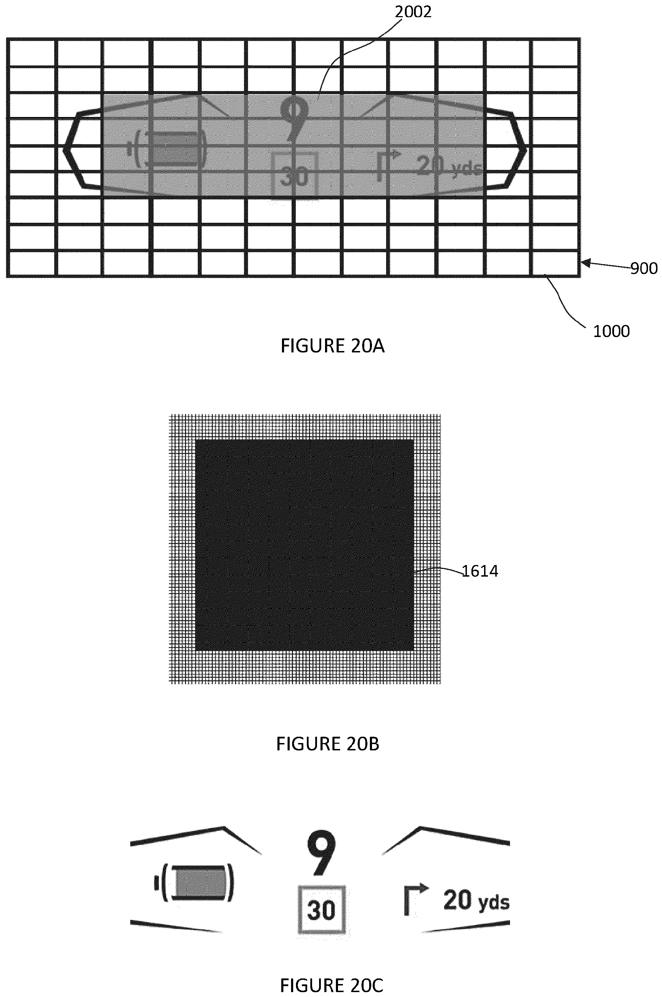

Figure 18 is a flow diagram representing a third accumulation 1800 as applied to a 2D array of cells of a target picture. In the description below, the third accumulation 1800 is applied to a 2D array of cells 2002 of the target picture 900, as shown in Figure 20A. The 2D array of cells 2002 is shaded in grey in Figure 20A, for illustrative purposes. The 2D array of cells 2002 corresponds to the cells of the central portion 1104 of Figure 11.

Step 1802 of the third accumulation 1800 comprises setting a counter, I, to zero. This counter is stored in a memory of a hologram engine arranged to perform the hologram calculation method (not shown in the drawings).

Step 1804 of the third accumulation 1800 comprises comparing the current value of counter, I, to the number of rows of cells in the 2D array 2002, z. In this example, there are 4 individual rows of cells in the array 2002. So, z = 4 in this example.

If I is less than z, the third accumulation 1800 moves to step 1806. If I is equal to or greater than z, then the third accumulation 1800 moves to step 1812.

Step 1806 of the third accumulation 1800 comprises performing the second accumulation 1700 for the Ith row of cells in the 2002. Thus, the third accumulation 1800 effectively comprises performing the second accumulation 1700 (optionally, for a plurality of iterations).

As per step 1716 of the second accumulation 1700, the hologram values determined in the second accumulation 1700 are output to the third accumulator. Thus, step 1808 of the third accumulation 1800 comprises receiving the hologram values determined in the second accumulation. Step 1808 of the third accumulation 1800 further comprises storing the hologram values in a memory of the hologram engine. If hologram values are already stored in the memory for the respective pixels (because a second accumulation has already been performed for a previous row of cells in array 2002) then step 1808 comprises adding (i.e. accumulating or summing or superimposing) the hologram values for each pixel 1614 to the currently stored hologram value for that pixel. Thus, each value of each pixel may effectively be a running total combining the values calculated for that pixel for each cell in the row of cells.

Step 1810 of the second accumulation comprises increasing the counter, I, by one. The third accumulation 1800 then returns to step 1804.

Steps 1804 to 1810 of the third accumulation 1800 are repeated for each cell, I, of the row of cells 2002. For each iteration, the second accumulation is performed for the Ith row of cells and new hologram values are determined in the second accumulation which are added to the hologram values already stored in the memory of the hologram engine for the third accumulation.

The hologram values at step 1808 of the third accumulation are represented in Figure 20B. Because the hologram values determined at step 1808 correspond to the output of the second accumulation, Figure 20B corresponds to Figure 19C.

The third accumulation continues iterating steps 1804 to 1810 for each cell until I equals z. When I equals z, the third accumulation 1800 moves to step 1812 instead of step 1806.

Step 1812 of the third accumulation 1800 comprises outputting a hologram. The hologram is at full resolution in the x and y direction. The hologram values also include one or more grating functions.

If the output of step 1812 were displayed on a display device (such as a liquid crystal on silicon spatial light modulator) and suitably illuminated, a holographic reconstruction of the image points of the array of cells 1902 would be formed. This is what is shown in Figure 20C.

Step 1814 of the third accumulation 1800 comprises clearing the memory used for the third accumulation.

In three accumulators described above allow for a hologram to be determined for the array of cells 1802 shown in Figure 20A corresponding to the central portion shown in Figure 11. This is a portion in which image points may have associated hologram values having a low enough spatial frequency that the hologram values may be initially under-sampled. In examples, hologram values for the remaining cells, corresponding to the outer portion shown in Figure 11, may be calculated using a point cloud hologram in a conventional manner (e.g. without under-sampling and interpolation). These values may be added to the hologram output in step 1812 of the third accumulation.

In some examples, the array of cells may comprise all cells of the target picture. Thus, the first accumulator may be iteratively applied (via the second and third accumulators) to each cell of the array of cells. In such embodiments, the image points of each cell may be moved or otherwise processed to be closer to the centre of the target picture before applying the accumulations. First and second grating functions may then be used to compensate for that processing. The skilled reader will appreciate that different first and second grating functions may need to be applied to each cell (in the first and second interpolation) to push the cell and / or row of cells back to their respective original positions.

In some examples, the under-sampling may be different for different cells, in conformance with what was described inr3elation to Figure 12.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A hologram engine for calculating a hologram of a target picture comprising a plurality of image points, the hologram engine being arranged to perform a first data processing stage comprising, for a first subset of image points:
determining, using a point cloud method, a value for every nth pixel of a display device for displaying the hologram, wherein n is greater than 1; and
determining a value for at least some of the other pixels by performing a first interpolation;
wherein each image point of the first subset has an associated diffraction angle for use in the point cloud method, each diffraction angle being less than a maximum diffraction angle of the display device.

2. A hologram engine as claimed in claim 1, wherein the hologram engine is arranged such that determining the values for each nth pixel comprises:
for each image point of the first subset, using a point cloud method to determine values for the nth pixels of the display device; and
combining the values determined for each image point at each of the nth pixels.

3. A hologram engine as claimed in claim 2, wherein the first interpolation is based on the combined values determined for each nth pixel.

4. A hologram engine as claimed in any one of the preceding claims, wherein the values determined using the point cloud method for each image point are values representing the contribution of a wave propagated along a path that makes an angle with the display device that is equal to the associated diffraction angle for the respective image point.

5. A hologram engine as claimed in any one of the preceding claims, wherein the diffraction angle associated with each image point of the first subset is defined either:
by a first path from the image point to an entrance pupil of a viewer; or
by a second path arranged as if the respective image point has been translated to be closer to a centre of the target picture such that the second path makes an angle with the display device that is reduced relative to an angle made by the respective first path for that image point.

6. A hologram engine as claimed in any one of the preceding claims, wherein the maximum diffraction angle of the display device defines a replay field comprising a central portion surrounded by an outer portion, the central portion comprising a centre of the replay field, wherein the central portion occupies less than 50% of the replay field, optionally, wherein the first subset of image points are contained in the central portion of the replay field; or wherein the point cloud method is arranged such that it is as if the first subset of image points have been translated from the outer potion to the central portion of the replay plane.

7. A hologram engine as claimed in any one of the preceding claims, wherein the hologram engine is arranged such that at least some of the pixels for which values are determined using a point cloud method are separated in a first dimension by one or more first intermediate pixels, and wherein the first interpolation is performed in the first dimension to determine values for the first intermediate pixels, optionally, wherein the first data processing stage further comprises applying a first grating function arranged to translate light incident thereon in a first direction that is parallel to the first dimension and the grating function is applied after the first interpolation.

8. A hologram engine as claimed in any one of the preceding claims, wherein the hologram is for a display device comprising an array of pixels extending in the first dimension and a second dimension perpendicular to the first dimension, and
wherein the hologram engine is arranged such that at least some of the pixels for which values are determined using a point cloud method are separated in the second dimension by one or more second intermediate pixels, optionally, wherein the hologram engine is arranged determine values for the second intermediate pixels by performing a second interpolation in the second dimension, the hologram engine being arranged to perform the second interpolation after the first interpolation.

9. A hologram engine as claimed in any one of the preceding claims, wherein the hologram engine is arranged to perform a second data processing stage, wherein the second data processing stage comprises:
receiving the values determined in the first data processing stage; and
repeating the first data processing stage for k subsets of image points of the target picture and receiving the respective values, each of the k subsets of image points corresponding to a discrete angular range defined by a first angle in the first dimension and a second angle in the second dimension, the second angle being the same for each of the k subsets.

10. A hologram engine as claimed in claim 9, wherein the hologram engine is further arranged to combine the values determined for each of the nth pixels and the first intermediate pixels during the second data processing stage
or
when dependent on claim 8, wherein the second data processing stage comprises the second interpolation, and wherein the hologram engine is arranged such that the second interpolation is performed after the step of combining the values determined during the second data processing stage.

11. A hologram engine as claimed in any one of claims 9 to 10, wherein the second data processing stage further comprises applying a second grating function arranged to translate light incident thereon in a second direction that is parallel to the second dimension, optionally, when dependent on claim 14, wherein the hologram engine is arranged such that the second data processing stage comprises applying the second grating function after performing the second interpolation.

12. A hologram engine as claimed in any one of claims 9 to 11, wherein the hologram engine is arranged to perform a third data processing stage, wherein the third data processing stage comprises:
receiving the values determined in the second data processing stage;
repeating the second data processing stage for I subsets of image points of the target picture and receiving the respective values, each of the I subsets of image points corresponding to a discrete angular range defined by a first angle in the first dimension and a second angle in the second dimension wherein the second angle is different each time the second data processing stage is repeated.

13. A hologram engine as claimed in any one of the preceding claims, wherein the hologram engine is arranged to divide the target picture into an array of cells, each cell containing a subset of image points, optionally, wherein the first data processing stage is performed initially for the image points of a first cell of the array of cells.

14. A hologram engine as claimed in claim 13, when dependent on claim 9, wherein the second data processing stage comprises repeating the first data processing stage for each cell in a column or row of cells of the array of cells which comprises the first cells, optionally, when dependent on claim 12, wherein the third data processing stage comprises repeating the first and second data processing stages for each column or row cells of the array of cells.

15. A method of calculating a hologram of a target picture comprising a plurality of image points, the method comprising performing a first data processing stage comprising, for a first subset of image points:
determining, using a point cloud method, a value for every nth pixel of a display device for displaying the hologram, wherein n is greater than 1; and
determining a value for at least some of the other pixels by performing a first interpolation;
wherein each image point of the first subset has an associated diffraction angle for use in the point cloud method, each diffraction angle being less than a maximum diffraction angle of the display device.
